# EUROPÄISCHE PATENTSCHRIFT

(11) **EP 3 076 834 B1**
(45) Veröffentlichungstag und Bekanntmachung des Hinweises auf die Patenterteilung: **29.08.2018**
(21) Anmeldenummer: 14827730.4
(22) Anmeldetag: 05.12.2014
(51) Int. Cl.: A47J 31/60

(54) **GETRÄNKEBEREITUNGSMASCHINE UND VERFAHREN ZUM BETREIBEN EINER GETRÄNKEBEREITUNGSMASCHINE**
BEVERAGE PREPARATION MACHINE AND METHOD FOR OPERATING THE SAME
MACHINE DE PRÉPARATION DE BOISSONS ET PROCÉDÉ DE FONCTIONNEMENT D'UNE MACHINE DE PRÉPARATION DE BOISSONS

(30) Priorität: 06.12.2013 EP 13405134
(43) Veröffentlichungstag der Anmeldung: 12.10.2016
(73) Patentinhaber: JURA Elektroapparate AG, 4626 Niederbuchsiten (CH)
(72) Erfinder: FASNACHT, Lukas, CH-4600 Olten (CH)
(74) Vertreter: EGLI-EUROPEAN PATENT ATTORNEYS
(86) Internationale Anmeldenummer: PCT/EP2014/003257
(87) Internationale Veröffentlichungsnummer: WO 2015/082079

(56) Entgegenhaltungen:
- EP-A1- 1 010 385
- EP-A1- 2 082 670
- DE-A1-102008 052 273
- GB-A- 2 325 179

## Beschreibung

Die Erfindung bezieht sich auf eine Getränkebereitungsmaschine zum Bereiten eines Getränks und ein Verfahren zum Betreiben einer Getränkebereitungsmaschine.

Es sind Getränkebereitungsmaschinen bekannt, welche ein Getränk unter Verwendung einer Flüssigkeit zubereiten und abgeben können. Je nach Art des Getränks kann es dabei vorgesehen sein, zur Zubereitung des Getränks eine Portion einer Flüssigkeit (z.B. Wasser) mit einer vorgegebenen Menge einer geschmacksbildenden Substanz(z.B. Kaffee, Tee o.ä.) für eine bestimmte Zeit miteinander in Wechselwirkung zu bringen, sodass die jeweilige geschmacksbildende Substanz oder Teile der Substanz (z.B. in der Substanz enthaltene Aromastoffe) sich mit der Flüssigkeit mischen oder in der Flüssigkeit auflösen und auf diese Weise ein konsumierbares Getränk bilden. Diese Art der Zubereitung kommt meist zum Einsatz, wenn die geschmacksbildende Substanz zwar lange Zeit gelagert werden kann, das aus der Flüssigkeit und der geschmacksbildenden Substanz zubereitete Getränk aber unmittelbar nach der Zubereitung schnell auf eine unerwünschte oder unakzeptable Weise verändert (z.B. hinsichtlich des Geschmacks, seiner Konsistenz oder seiner Temperatur).

Derartige Getränkebereitungsmaschinen sind deshalb meist so konzipiert, dass sie ein Getränk jeweils bei einem aktuellen Bedarf frisch zubereiten, in der Regel unmittelbar nach einem von einem Benutzer zu gebenden Befehl. Zu diesem Zweck umfassen derartige Getränkebereitungsmaschinen häufig eine Getränke-Zubereitungseinrichtung zur Zubereitung des Getränks mittels einer Flüssigkeit, einen Flüssigkeitsbehälter für eine Flüssigkeit und ein Fluidsystem, welches eine Zufuhr von Flüssigkeit vom Flüssigkeitsbehälter zur Getränke-Zubereitungseinrichtung ermöglicht, sodass die Getränke-Zubereitungseinrichtung in der Lage ist, ein Getränk mit einer im Flüssigkeitsbehälter bereitgestellten Flüssigkeit (z.B. Wasser) zuzubereiten. Das Fluidsystem der Getränkebereitungsmaschinen kann dementsprechend mindestens eine Fluidleitung umfassen, welche mit dem Flüssigkeitsbehälter und der Getränke-Zubereitungseinrichtung verbunden ist und so eine Zufuhr einer Flüssigkeit vom Flüssigkeitsbehälter zur Getränke-Zubereitungseinrichtung durch die mindestens eine Fluidleitung ermöglicht.

Getränkebereitungsmaschinen der vorstehend genannten Art (z.B. Kaffeemaschinen, insbesondere Kaffeeautomaten) werden meist so konzipiert, dass sie vielfältige Anforderungen erfüllen können: Sie sollen beispielsweise von einem Benutzer auf einfache Weise bedient werden können; ausserdem sollen sie Bedürfnisse vieler verschiedener Benutzer befriedigen können, welche in der Regel unterschiedliche Wünsche hinsichtlich der Bedienung einer Getränkebereitungsmaschine und/oder der Zubereitung eines Getränks und/oder des Geschmacks der zuzubereitenden Getränke haben.

Um eine einfache Bedienung zu ermöglichen, sind Getränkebereitungsmaschinen der vorstehend genannten Art mit einer Steuervorrichtung versehen, welche einen Betrieb der jeweiligen Getränkebereitungsmaschine gewährleisten soll, der weitgehend automatisch abläuft und nur wenige manuelle Eingriffe eines Benutzers erfordert. Um ausserdem die vielfältigen unterschiedlichen Anforderungen und Wünsche verschiedener Benutzer erfüllen können, sind derartige Getränkebereitungsmaschinen meist derart eingerichtet, dass sie in mehreren verschiedenen Betriebsmodi betrieben werden können, welche in der Regel unabhängig voneinander aktiviert werden können, beispielsweise spontan veranlasst durch einen Benutzer oder automatisch veranlasst durch die Steuervorrichtung der Getränkebereitungsmaschine (z.B. falls während des Betriebs der Getränkebereitungsmaschine bestimmte Ereignisse eintreten, auf welche die Steuervorrichtung auf eine vorbestimmte Weise reagieren soll, beispielsweise mit einer Aktivierung eines bestimmten Betriebsmodus). Die Betriebsmodi umfassen dabei in der Regel selbstverständlich zumindest einen Betriebsmodus zur Zubereitung eines Getränks. Es ist sogar üblich, dass die Gesamtheit aller Betriebsmodi einer Getränkebereitungsmaschine mehrere Betriebsmodi umfasst, welche zur Zubereitung mehrerer verschiedener Getränke dienen können.

Eine Getränkebereitungsmaschine der vorstehend genannten Art kann beispielsweise als Kaffeemaschine ausgelegt sein, welche in der Lage ist, in einer Getränke-Zubereitungseinrichtung der Getränkebereitungsmaschine mit einer Flüssigkeit auf mehrere verschiedene Arten Kaffee zu brühen und auf diese Weise verschiedene Kaffeegetränke herzustellen. In diesem Fall kann die Getränke-Zubereitungseinrichtung als Brüheinheit, in welcher Kaffee mit heissem Wasser gebrüht werden kann, ausgelegt sein und die Zubereitung verschiedener Kaffeegetränke in jeweils verschiedenen Betriebsmodi organisiert sein. Zur Zubereitung der Kaffeegetränke kann Wasser in dem Flüssigkeitsbehälter der Getränkebereitungsmaschine bereitgestellt werden und über das Fluidsystem der Getränke-Zubereitungseinrichtung (Brüheinheit) zugeführt werden. Um heisses Wasser mit einer für das Brühen von Kaffee geeigneten Temperatur bereitstellen zu können, kann beispielsweise das Fluidsystem mit einer Heizeinrichtung ausgestattet sein, welches Wasser bei einer Zufuhr vom Flüssigkeitsbehälter zur Getränke-Zubereitungseinrichtung auf eine Temperatur erhitzt, welche ausreichend hoch ist, um das Brühen von Kaffee in der Getränke-Zubereitungseinrichtung zu ermöglichen.

Um einen benutzerfreundlichen und über eine lange Zeit möglichst störungsfreien Betrieb und eine Zubereitung einer grossen Zahl von Portionen eines Getränks mit möglichst gleichbleibender Qualität zu ermöglichen, sind Getränkebereitungsmaschinen der vorstehend genannten Art meist derart konzipiert, dass spezielle Betriebsmodi vorgesehen sind, welche unter Kontrolle der Steuervorrichtung aktivierbar sind und einem Benutzer die Möglichkeit bieten, Veränderungen an der Getränkebereitungsmaschine oder Wartungsarbeiten während des Betriebs der Getränkebereitungsmaschine vorzunehmen. Beispielsweise kann die Funktion des Fluidsystems im Betrieb der Getränkebereitungsmaschine dadurch beeinträchtigt werden, dass Ablagerungen von Schmutz und/oder Kalk in Fluidleitungen des Fluidsystems mit der Zeit ständig zunehmen (abhängig vom Verschmutzungsgrad bzw. dem Kalkgehalt der jeweiligen Flüssigkeiten, welche im Betrieb der Getränkebereitungsmaschine durch die jeweiligen Fluidleitungen fliessen). Übermässige Ablagerungen von Schmutz und/oder Kalk können den Durchfluss von Flüssigkeit durch die Fluidleitungen vermindern oder verhindern und unter Umständen den Betrieb bestimmter Komponenten des Fluidsystems beeinträchtigen, beispielsweise den Betrieb von Ventilen oder von Heizrichtungen (z.B. Durchlauferhitzer), welche zum Erhitzen der Flüssigkeit beim Durchfluss durch die Fluidleitungen vorhanden sein können. Ausserdem können Ablagerungen von Schmutz und/oder Kalk in Fluidleitungen des Fluidsystems den Geschmack der zubereiteten Getränke negativ beeinflussen.

Um Ablagerungen von Schmutz und/oder Kalk in Fluidleitungen des Fluidsystems zu vermindern, ermöglichen Getränkebereitungsmaschinen der vorstehend genannten Art in der Regel eine Aktivierung spezieller Betriebsmodi, welche einer Reinigung und/oder Entkalkung des Fluidsystems dienen. Es kann beispielsweise ein Betriebsmodus zur Reinigung des Fluidsystems aktivierbar sein, in welchem unter Kontrolle der Steuervorrichtung der Getränkebereitungsmaschine eine Reinigungsflüssigkeit vom Flüssigkeitsbehälter aus in das Fluidsystems eingeleitet werden kann, um die jeweiligen Fluidleitungen des Fluidsystems oder zumindest bestimmte Abschnitte dieser Fluidleitungen von Verschmutzungen zu befreien. Entsprechend kann beispielsweise ein Betriebsmodus zur Entkalkung des Fluidsystems aktivierbar sein, in welchem unter Kontrolle der Steuervorrichtung der Getränkebereitungsmaschine eine Entkalkungsflüssigkeit vom Flüssigkeitsbehälter aus in das Fluidsystems eingeleitet werden kann, um die jeweiligen Fluidleitungen des Fluidsystems oder zumindest bestimmte Abschnitte dieser Fluidleitungen von Kalbablagerungen zu befreien.

Bei Getränkebereitungsmaschinen der vorstehend genannten Art besteht häufig die Möglichkeit, die Flüssigkeit, welche im Flüssigkeitsbehälter bereitgestellt ist, vor einem Eintritt in die jeweiligen Fluidleitungen des Fluidsystems mittels eines Flüssigkeitsfilters zu filtern, um so den Gehalt von Schmutz und/oder den Kalkgehalt der durch die jeweiligen Fluidleitungen fliessenden Flüssigkeit zu reduzieren. Eine Getränkebereitungsmaschine weist deshalb meist eine Aufnahmeeinrichtung zum Aufnehmen eines Flüssigkeitsfilters auf, welcher an einer vorgegebenen Filterposition platzierbar und wieder entfernbar ist, wobei die Aufnahmeeinrichtung derart ausgebildet ist, dass unabhängig davon, ob ein Flüssigkeitsfilter an der vorgegebenen Filterposition platziert ist, eine Zufuhr einer Flüssigkeit vom Flüssigkeitsbehälter zur Getränke-Zubereitungseinrichtung durch die mindestens eine Fluidleitung möglich ist, und dass, falls ein Flüssigkeitsfilter an der vorgegebenen Filterposition platziert ist, bei der Zufuhr einer Flüssigkeit vom Flüssigkeitsbehälter in die mindestens eine Fluidleitung zumindest ein Teil der Flüssigkeit den Flüssigkeitsfilter passieren muss. Die Verwendung eines Flüssigkeitsfilters ist dabei optional und liegt im Ermessen der jeweiligen Benutzer. Kann für die Zubereitung von Getränken als Flüssigkeit beispielsweise sauberes Wasser mit einem geringen Kalkgehalt im Flüssigkeitsbehälter bereitgestellt werden, so könnte ohne weiteres darauf verzichtet werden, die Aufnahmeeinrichtung mit einem Flüssigkeitsfilter zu versehen, zumal die Verwendung eines Flüssigkeitsfilters in diesem Fall keinen Effekt oder nur einen geringen Effekt auf die Qualität des verwendeten Wassers hätte.

Steht für die Zubereitung von Getränken als Flüssigkeit anderseits nur Wasser mit einem hohen Kalkgehalt oder Verunreinigungen enthaltendes Wasser zur Verfügung, so kann es nützlich sein, die Aufnahmeeinrichtung mit einem Flüssigkeitsfilter zu versehen. Die Verwendung von Flüssigkeitsfiltern hätte in diesem Fall den Vorteil, dass eine Entkalkung bzw. Reinigung der jeweiligen Fluidleitungen nur selten vorgenommen werden müsste. Dem steht als Nachteil gegenüber, dass ein im Gebrauch befindlicher Flüssigkeitsfilter vorzugsweise nach einer gewissen Zeit durch einen ungebrauchten Filter ersetzt werden müsste, zumal ein im Gebrauch befindlicher Flüssigkeitsfilter degradiert und seine Filterwirkung mit der Zeit nachlässt, sodass letztlich eine völlige Erschöpfung der Filterwirkung eintreten kann. Wird ein gebrauchter Flüssigkeitsfilter nicht rechtzeitig durch einen anderen (ungebrauchten) Flüssigkeitsfilter ersetzt, so hätte dies den nachteiligen Effekt, dass eine Verschmutzung bzw. Verkalkung der jeweiligen Fluidleitungen trotz Verwendung des Flüssigkeitsfilters letztlich nicht verhindert wird. In diesem Fall wäre es demnach nach einer gewissen Zeit trotzdem notwendig, eine Entkalkung bzw. Reinigung der jeweiligen Fluidleitungen vorzunehmen, d.h. der oben erwähnte Betriebsmodus zur Entkalkung des Fluidsystems bzw. der oben erwähnte Betriebsmodus zur Reinigung des Fluidsystems müsste aktiviert werden, entsprechend müsste eine Entkalkungsflüssigkeit bzw. Reinigungsflüssigkeit im Flüssigkeitsbehälter bereitgestellt werden.

Bei Getränkebereitungsmaschinen der vorstehend genannten Art ist es in der Regel einem Benutzer überlassen, im Betrieb einer Getränkebereitungsmaschine - in der Regel mittels entsprechender manueller Eingriffe des Benutzers - für die Bereitstellung der jeweils benötigten Flüssigkeit im Flüssigkeitsbehälter, für eine Platzierung eines Flüssigkeitsfilters an der vorgegebenen Filterposition und für den Ersatz eines im Gebrauch befindlichen Flüssigkeitsfilters durch einen ungebrauchten Flüssigkeitsfilter zu sorgen. Um einen weitgehend problemlosen Betrieb einer derartigen Getränkebereitungsmaschinen zu gewährleisten, muss ein Benutzer in der Regel über detaillierte Kenntnisse über die Getränkebereitungsmaschine und insbesondere über Einzelheiten der verschiedenen Betriebsmodi der Getränkebereitungsmaschine verfügen. Dabei sind fehlerhafte Bedienungen der Getränkebereitungsmaschine durch den Bediener nicht ausgeschlossen. Beispielsweise ist es denkbar, dass ein Benutzer - in der Annahme, dass das Fluidsystem der Getränkebereitungsmaschine verkalkt oder verunreinigt ist - einerseits die jeweiligen Fluidleitungen des Fluidsystems entkalken bzw. reinigen möchte und ausserdem im weiteren Betrieb der Getränkebereitungsmaschine einen Flüssigkeitsfilter zum Filtern der im Flüssigkeitsbehälter bereitgestellten Flüssigkeit verwenden möchte. In diesem Fall kann der Benutzer eine Entkalkungsflüssigkeit oder eine Reinigungsflüssigkeit im Flüssigkeitsbehälter bereitstellen und den Betriebsmodus zur Entkalkung der jeweiligen Fluidleitungen oder den Betriebsmodus zur Reinigung der jeweiligen Fluidleitungen aktivieren, was den Effekt hätte, dass die Steuervorrichtung eine Zufuhr der Entkalkungsflüssigkeit bzw. der Reinigungsflüssigkeit vom Flüssigkeitsbehälter in die jeweiligen Fluidleitungen des Fluidsystems veranlassen würde. Sollte in diesem Falle ein Flüssigkeitsfilter an der vorgegebenen Filterposition platziert sein, würde zumindest ein Teil der Entkalkungsflüssigkeit bzw. der Reinigungsflüssigkeit, welche vom Flüssigkeitsbehälter aus in die jeweiligen Fluidleitungen eingeleitet würde, zwangsweise den Flüssigkeitsfilter passieren. Letzteres kann erhebliche Probleme verursachen.

Die Entkalkungsflüssigkeit bzw. die Reinigungsflüssigkeit kann beispielsweise nicht mit dem Flüssigkeitsfilter verträglich sein und unter Umständen, in der Regel vom Benutzer unbemerkt, unerwünschte Reaktionen im Flüssigkeitsfilter auslösen, in der Regel mit Nachteilen für den weiteren Betrieb der Getränkebereitungsmaschine. Einerseits können die Entkalkungsflüssigkeit bzw. die Reinigungsflüssigkeit bestimmte im Flüssigkeitsfilter enthaltene Materialien verändern oder gegebenenfalls zerstören. Dies kann den Effekt haben, dass der Flüssigkeitsfilter nach Beendigung des Betriebsmodus zur Entkalkung der jeweiligen Fluidleitungen bzw. des Betriebsmodus zur Reinigung der jeweiligen Fluidleitungen im weiteren Betrieb der Getränkebereitungsmaschine nicht mehr die erwartete Filterwirkung erbringen kann, sodass die jeweiligen Fluidleitungen weiter verkalken bzw. verschmutzen, ohne dass dies dem Benutzer bewusst ist. Ein zusätzliches Problem kann entstehen, wenn der an der vorgegebenen Filterposition platzierte Flüssigkeitsfilter vor der Aktivierung des Betriebsmodus zur Entkalkung der jeweiligen Fluidleitungen bzw. des Betriebsmodus zur Reinigung der jeweiligen Fluidleitungen längere Zeit im Einsatz war, sodass sich grosse Mengen von Kalk und/oder grosse Mengen von Verschmutzungen im Flüssigkeitsfilter angesammelt haben können. In diesem Fall kann die Entkalkungsflüssigkeit bzw. die Reinigungsflüssigkeit beim Passieren durch den Flüssigkeitsfilter bewirken, dass sich schlagartig grosse Mengen von kalkhaltigem Material oder von Verschmutzungen vom Flüssigkeitsfilter ablösen und in die jeweiligen Fluidleitungen transportiert werden, mit dem Effekt, dass das kalkhaltige Material bzw. die Verschmutzungen in den Fluidleitungen festsetzen und gegebenenfalls die Fluidleitungen verstopfen können. Hierbei sind insbesondere Fluidleitungen bzw. Fluidleitungsabschnitte im Bereich von Ventilen, Pumpen oder Heizrichtungen (z.B. Durchlauferhitzer), welche zum Erhitzen der Flüssigkeit beim Durchfluss durch die Fluidleitungen vorhanden sein können, gefährdet.

Es ist Aufgabe der Erfindung, die genannten Nachteile zu vermeiden und eine Getränkebereitungsmaschine zu schaffen, welche die Verwendung eines Flüssigkeitsfilters gestattet und eine fehlerhafte Bedienung der Getränkebereitungsmaschine durch einen Benutzer hinsichtlich der Verwendung eines Flüssigkeitsfilters zu vermeiden hilft. Ausserdem soll ein entsprechendes Verfahren zum Betreiben einer Getränkebereitungsmaschine angegeben werden.

Diese Aufgabe wird gemäss der Erfindung gelöst durch eine Getränkebereitungsmaschine mit den Merkmalen des Patentanspruchs 1 und ein Verfahren mit den Merkmalen des Patentanspruchs 8.

Die Getränkebereitungsmaschine zum Bereiten eines Getränks ist in mehreren Betriebsmodi betreibbar und umfasst: einen Flüssigkeitsbehälter für eine Flüssigkeit; eine Getränke-Zubereitungseinrichtung zur Zubereitung des Getränks mittels einer Flüssigkeit; mindestens eine Fluidleitung, welche mit dem Flüssigkeitsbehälter und der Getränke-Zubereitungseinrichtung verbunden ist, um eine Zufuhr einer Flüssigkeit vom Flüssigkeitsbehälter zur Getränke-Zubereitungseinrichtung durch die mindestens eine Fluidleitung zu ermöglichen; eine Aufnahmeeinrichtung zum Aufnehmen eines Flüssigkeitsfilters, welcher an einer vorgegebenen Filterposition platzierbar und wieder entfernbar ist; einen Sensor zum Detektieren eines Flüssigkeitsfilters und eine Steuervorrichtung zum Steuern einer Zufuhr einer Flüssigkeit vom Flüssigkeitsbehälter in die mindestens eine Fluidleitung. Dabei ist die Aufnahmeeinrichtung derart ausgebildet, dass unabhängig davon, ob ein Flüssigkeitsfilter an der vorgegebenen Filterposition platziert ist, eine Zufuhr einer Flüssigkeit vom Flüssigkeitsbehälter zur Getränke-Zubereitungseinrichtung durch die mindestens eine Fluidleitung möglich ist, und dass, falls ein Flüssigkeitsfilter an der vorgegebenen Filterposition platziert ist, bei einer Zufuhr einer Flüssigkeit vom Flüssigkeitsbehälter in die mindestens eine Fluidleitung zumindest ein Teil der Flüssigkeit den Flüssigkeitsfilter passieren muss. Weiterhin ist der Sensor dazu ausgebildet ist, ein Signal zu erzeugen, welches eine Information darüber enthält, ob ein Flüssigkeitsfilter an der vorgegebenen Filterposition platziert ist.

Gemäss der Erfindung ist die Steuervorrichtung, beispielsweise ein Mikroprozessor, ausgebildet, die Zufuhr einer Flüssigkeit vom Flüssigkeitsbehälter in die mindestens eine Fluidleitung in Abhängigkeit von dem Signal des Sensors zu veranlassen, wobei die Steuervorrichtung dazu ausgebildet ist, dass sie in mindestens einem der Betriebsmodi die Zufuhr einer Flüssigkeit unabhängig davon veranlasst, ob ein Flüssigkeitsfilter an der vorgegebenen Filterposition platziert ist, und in mindestens einem anderen der Betriebsmodi die Zufuhr einer Flüssigkeit ausschliesslich dann veranlasst, wenn kein Flüssigkeitsfilter an der vorgegebenen Filterposition platziert ist.

Die erfindungsgemässe Getränkebereitungsmaschine hat den Vorteil, dass mit Unterstützung der Steuervorrichtung bestimmte fehlerhafte Bedienungen der Getränkebereitungsmaschine durch einen Benutzer mit grosser Wahrscheinlichkeit vermieden werden können. Dabei ist relevant, dass die Steuervorrichtung in der Lage ist, anhand des Signals des Sensors automatisch zu ermitteln, ob ein Flüssigkeitsfilter vorhanden ist oder nicht.

Diejenigen Betriebsmodi, in denen die Zufuhr einer Flüssigkeit vom Flüssigkeitsbehälter in die jeweiligen Fluidleitungen unabhängig davon veranlassbar ist, ob ein Flüssigkeitsfilter an der vorgegebenen Filterposition platziert ist, sind dabei für Betriebsvorgänge der Getränkebereitungsmaschine bestimmt, bei denen sichergestellt ist oder bei denen mit grosser Wahrscheinlichkeit davon ausgegangen werden kann, dass ein Benutzer im Flüssigkeitsbehälter eine Flüssigkeit bereitstellen würde, welche mit der Verwendung eines Flüssigkeitsfilters verträglich ist. Eine Aktivierung eines dieser Betriebsmodi ist deshalb grundsätzlich unproblematisch hinsichtlich der Verwendung eines Flüssigkeitsfilters, unabhängig davon, ob ein Flüssigkeitsfilter an der vorgegebenen Filterposition platziert ist oder nicht. Dies ist in der Regel der Fall für diejenigen Betriebsmodi, welche der Zubereitung eines Getränks dienen, sodass anzunehmen ist, dass ein Benutzer in der Regel Wasser als Flüssigkeit bereitstellen würde (also eine Flüssigkeit, welche mit der Verwendung eines Flüssigkeitsfilters mit Sicherheit verträglich wäre).

Hingegen sind diejenigen Betriebsmodi, in denen die Zufuhr einer Flüssigkeit vom Flüssigkeitsbehälter in die jeweiligen Fluidleitungen nicht veranlassbar ist, wenn ein Flüssigkeitsfilter an der vorgegebenen Filterposition platziert ist, in der Regel für solche Betriebsvorgänge der Getränkebereitungsmaschine bestimmt, bei denen angenommen werden kann, dass ein Benutzer im Flüssigkeitsbehälter eine Flüssigkeit bereitstellen könnte oder höchstwahrscheinlich bereitstellen würde, welche mit der Verwendung eines Flüssigkeitsfilters nicht verträglich ist. Dies betrifft insbesondere Betriebsvorgänge, welche mit einer Entkalkung oder Reinigung der jeweiligen Fluidleitungen im Zusammenhang stehen. Eine Aktivierung derartiger Betriebsmodi wäre grundsätzlich problematisch, falls ein Flüssigkeitsfilter an der vorgegebenen Filterposition platziert wäre. Die Steuervorrichtung der erfindungsgemässen Getränkebereitungsmaschine verhindert deshalb vorsichtshalber eine Zufuhr einer Flüssigkeit aus dem Flüssigkeitsbehälter in die jeweiligen Fluidleitungen, falls ein Flüssigkeitsfilter an der vorgegebenen Filterposition platziert ist. Auf diese Weise kann weitgehend ausgeschlossen werden, dass im Betrieb der Getränkebereitungsmaschine ein Flüssigkeitsfilter mit einer Flüssigkeit in Kontakt kommt, welche mit dem Flüssigkeitsfilter nicht verträglich ist, und zwar selbst dann, wenn ein Benutzer aus Versehen oder irrtümlich eine Entkalkungsflüssigkeit bzw. Reinigungsflüssigkeit im Flüssigkeitsbehälter bereitstellt und für eine Aktivierung eines Betriebsmodus zur Entkalkung oder Reinigung der jeweiligen Fluidleitungen sorgt. Eine Zufuhr von Flüssigkeit vom Flüssigkeitsbehälter in die jeweiligen Fluidleitungen würde von der Steuervorrichtung in diesem Fall auf jeden Fall nicht zugelassen. Dies geschieht automatisch, zumal die Anwesenheit eines Flüssigkeitsfilters durch den Sensor überwacht wird und die Steuereinheit das Signal des Sensors auswerten kann.

Entsprechend wird die der Erfindung zugrunde liegende Aufgabe auch durch ein Verfahren zum Betreiben einer Getränkebereitungsmaschine zum Bereiten eines Getränks der vorstehend genannten Art gelöst, welches die folgenden Schritte umfasst:
- Aktivieren eines der Betriebsmodi der Getränkebereitungsmaschine, wobei die Betriebsmodi zumindest einen Betriebsmodus zur Zubereitung eines Getränks und einen Betriebsmodus zur Reinigung oder Entkalkung der mindestens einen Fluidleitung umfassen,
- Auswerten eines Signals des Sensors mittels der Steuervorrichtung, wobei die Steuervorrichtung ermittelt, ob ein Flüssigkeitsfilter an der vorgegebenen Filterposition platziert ist, und eine Zufuhr einer Flüssigkeit vom Flüssigkeitsbehälter in die mindestens eine Fluidleitung steuert.

Gemäss der Erfindung umfasst dieses Verfahren zusätzlich den Schritt, dass die Steuervorrichtung
- für den Fall, dass der Betriebsmodus zur Zubereitung eines Getränks aktiviert wird, die Zufuhr einer Flüssigkeit vom Flüssigkeitsbehälter in die mindestens eine Fluidleitung unabhängig davon veranlasst, ob ein Flüssigkeitsfilter an der vorgegebenen Filterposition platziert ist, und
- für den Fall, dass der Betriebsmodus zur Reinigung oder Entkalkung der mindestens einen Fluidleitung aktiviert wird, die Zufuhr einer Flüssigkeit vom Flüssigkeitsbehälter in die mindestens eine Fluidleitung ausschliesslich dann veranlasst, wenn kein Flüssigkeitsfilter an der vorgegebenen Filterposition platziert ist.

Weitere Einzelheiten der Erfindung und insbesondere beispielhafte Ausführungsformen der erfindungsgemässen Vorrichtung und des erfindungsgemässen Verfahrens werden im Folgenden anhand der beigefügten Zeichnungen erläutert. Es zeigen:
- Fig. 1: eine schematische Darstellung einer Getränkebereitungsmaschine gemäss der Erfindung, mit einer Aufnahmeeinrichtung zum Aufnehmen eines Flüssigkeitsfilters, wobei ein Flüssigkeitsfilter an einer vorgegebenen Filterposition platziert ist;
- Fig. 2: die Getränkebereitungsmaschine gemäss Fig. 1, wobei kein Flüssigkeitsfilter an der vorgegebenen Filterposition platziert ist;
- Fig. 3: ein schematisches Ablaufdiagramm eines Verfahrens gemäss der Erfindung.

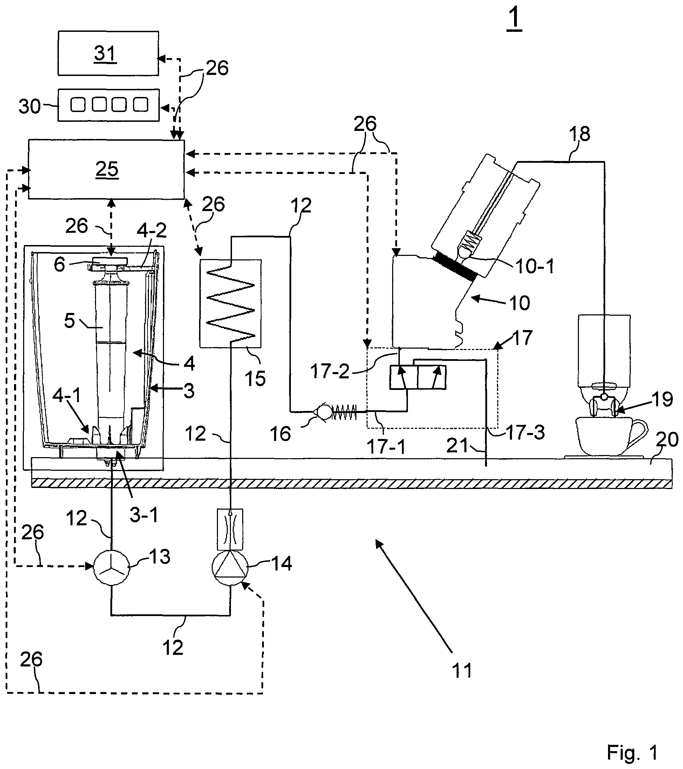

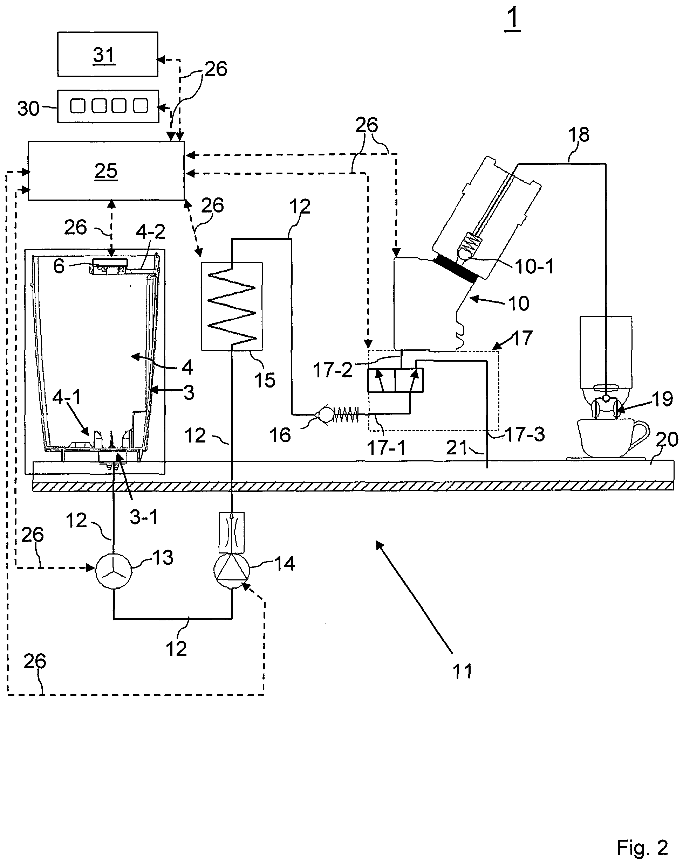

Fig. 1 und 2 zeigen eine erfindungsgemässe Getränkebereitungsmaschine 1 zum Bereiten eines Getränks. Die Getränkebereitungsmaschine 1 kann - wie in Fig. 1 und 2 als ein mögliches Beispiel dargestellt - als eine Kaffeemaschine (Kaffeeautomat) zum Bereiten von Kaffeegetränken ausgebildet sein. Selbstverständlich kann die Getränkebereitungsmaschine 1 auch dazu ausgelegt sein, zusätzlich oder alternativ zu Kaffeegetränken auch ein oder mehrere andere Getränke zuzubereiten.

Die Getränkebereitungsmaschine 1 umfasst einen Flüssigkeitsbehälter 3, welcher zum Aufnehmen bzw. Bereitstellen einer Flüssigkeit ausgebildet ist, eine Getränke-Zubereitungseinrichtung 10 zur Zubereitung eines Getränks mittels einer Flüssigkeit und ein Fluidsystem 11, welches eine Versorgung der Getränke-Zubereitungseinrichtung 10 mit einer im Flüssigkeitsbehälter 3 bereitgestellten Flüssigkeit ermöglicht. Dementsprechend umfasst das Fluidsystem mindestens eine Fluidleitung 12, welche mit dem Flüssigkeitsbehälter 3 und der Getränke-Zubereitungseinrichtung 10 verbunden ist, um eine Zufuhr einer Flüssigkeit vom Flüssigkeitsbehälter 3 zur Getränke-Zubereitungseinrichtung durch die mindestens eine Fluidleitung 12 zu ermöglichen.

Die Getränke-Zubereitungseinrichtung 10 ist in dem in Fig. 1 und 2 dargestellten Beispiel als Brüheinrichtung ausgebildet, welche eine (in Fig. 1 und 2 nicht dargestellte) Brühkammer aufweist, in welcher beispielsweise Kaffee mit einer heissen Flüssigkeit gebrüht werden kann.

Der Flüssigkeitsbehälter 3 weist einen Auslass 3-1 für die jeweils im Flüssigkeitsbehälter 3 bereitgestellte Flüssigkeit auf. Dabei ist ein Ende der Fluidleitung 12 an den Auslass 3-1 angeschlossen, während ein anderes Ende der Fluidleitung 12 über ein Umschaltventil 17 an die Getränke-Zubereitungseinrichtung 10 angeschlossen ist. Das Umschaltventil 17 weist drei Anschlüsse 17-1, 17-2 und 17-3 auf, über welche ein Fluid zugeführt bzw. abgeführt werden kann, und kann in mehrere Stellungen geschaltet werden, um (abhängig von den jeweiligen Stellungen) verschiedene Fluidverbindungen zwischen den Anschlüssen 17-1, 17-2 und 17-3 herstellen zu können. Wie Fig. 1 und 2 andeuten, ist der Anschluss 17-1 an die Fluidleitung 12 angeschlossen, während der Anschluss 17-2 mit der Getränke-Zubereitungseinrichtung 10 und insbesondere mit der erwähnten Brühkammer zum Brühen von Kaffee verbunden ist und der Anschluss 17-3 in eine Abflussleitung 21 mündet, welche ein offenes, oberhalb einer Restflüssigkeitsschale 20 platziertes Ende aufweist. Die Abflussleitung 21 bietet die Möglichkeit, bei Bedarf eine Restflüssigkeit, welche sich während eines Betriebes der Getränkebereitungsmaschine 1 in der Fluidleitung 12 und/oder in der Getränke-Zubereitungseinrichtung 10 ansammeln kann, in die Restflüssigkeitsschale 20 abfliessen zu lassen.

In der Darstellung gemäss Fig. 1 ist das Umschaltventil 17 in eine erste Stellung geschaltet, welche derart ausgebildet ist, dass eine Fluidverbindung zwischen den Anschlüssen 17-1 und 17-2 hergestellt ist. In diesem Fall ist die Getränke-Zubereitungseinrichtung 10 derart mit dem Flüssigkeitsbehälter 3 verbunden, dass eine Flüssigkeit vom Flüssigkeitsbehälter 3 über den Auslass 3-1, die Fluidleitung 12 und das Umschaltventil 17 bzw. den Anschluss 17-2 des Umschaltventils 17 zur Getränke-Zubereitungseinrichtung 10 transportiert und in die erwähnte Brühkammer zum Brühen von Kaffee geleitet werden kann.

Wie die Darstellung gemäss Fig. 2 andeutet, ist das Umschaltventil 17 in eine zweite Stellung schaltbar, welche derart ausgebildet ist, dass eine Fluidverbindung zwischen den Anschlüssen 17-1 und 17-3 hergestellt ist. In diesem Fall ist die Fluidleitung 12 mit dem Anschluss 17-3 des Umschaltventils 17 verbunden, sodass eine Flüssigkeit über den Anschluss 17-3 des Umschaltventils 17 und die Abflussleitung 21 aus der Fluidleitung 12 in die Restflüssigkeitsschale 20 abfliessen kann.

Weiterhin kann das Umschaltventil 17 derart konstruiert sein, dass es zumindest in eine weitere (in den Figuren nicht dargestellte) Stellung schaltbar ist, in welcher eine Fluidverbindung zwischen den Anschlüssen 17-2 und 17-3 hergestellt ist, so dass gegebenenfalls eine Restflüssigkeit aus der Getränke-Zubereitungseinrichtung 10 über das Umschaltventil 17 und die Abflussleitung 21 in die Restflüssigkeitsschale 20 abfliessen kann.

Wie Fig. 1 und 2 weiterhin andeuten, kann das Fluidsystem 11 mehrere Einrichtungen umfassen, welche es ermöglichen, eine im Flüssigkeitsbehälter 3 bereitgestellte Flüssigkeit der Fluidleitung 12 durch den Auslass 3-1 zuzuführen und in der Fluidleitung 12 zu transportieren und die Temperatur der Flüssigkeit zu regulieren. Zu diesem Zweck sind in die Fluidleitung 12 integriert: eine Pumpe 14 zum Transportieren einer Flüssigkeit entlang der Fluidleitung 12; ein Durchflussmesser 13 zum Messen eines Flusses einer Flüssigkeit durch die Fluidleitung 12 und eine Heizeinrichtung 15 (vorzugsweise ein Durchlauferhitzer) zum Heizen einer Flüssigkeit in der Fluidleitung 12. Weiterhin kann das Fluidsystem 11 ein Rückschlagventil 16 umfassen, welches einerseits einen Transport von Flüssigkeit durch die Fluidleitung 12 vom Flüssigkeitsbehälter 3 zum Umschaltventil 17 bzw. zur Getränke-Zubereitungseinrichtung 10 ermöglicht, aber einen Transport von Flüssigkeit in der umgekehrten Richtung von der Getränke-Zubereitungseinrichtung 10 bzw. vom Umschaltventil 17 zum Flüssigkeitsbehälter 3 verhindert.

Wie Fig. 1 und 2 weiterhin andeuten, weist die Getränkebereitungsmaschine 1 eine Aufnahmeeinrichtung 4 zum Aufnehmen eines Flüssigkeitsfilters 5 auf, um zu ermöglichen, dass eine der Fluidleitung 12 zuzuführende Flüssigkeit gefiltert werden kann, um gegebenenfalls Verunreinigungen zu entfernen bzw. den Kalkgehalt der Flüssigkeit zu reduzieren. Im vorliegenden Beispiel hat ein von der Aufnahmeeinrichtung 4 aufzunehmender Flüssigkeitsfilter 5 ein im Wesentlichen zylindrisches Gehäuse. Die Aufnahmeeinrichtung 4 umfasst einen Sitz 4-1 für einen Flüssigkeitsfilter 5, wobei der Flüssigkeitsfilter 5 auf dem Sitz 4-1 platzierbar ist und der Sitz 4-1 im vorliegenden Beispiel ausgebildet ist, zumindest ein Ende eines Flüssigkeitsfilters 5 zu halten, beispielsweise formschlüssig. Wie Fig. 1 und 2 ausserdem andeuten, kann die Aufnahmeeinrichtung 4 zusätzlich eine Halteeinrichtung 4-2 umfassen, welche geeignet ist, einen auf dem Sitz 4-1 platzierten Flüssigkeitsfilter 5 an einer vom Sitz 4-1 entfernten Stelle, beispielsweise an einem vom Sitz 4-1 entfernten Ende, zu halten. Auf diese Weise ermöglicht es die Aufnahmeeinrichtung 4, einen Flüssigkeitsfilter 5 an einer vorgegebenen Filterposition zu platzieren und dort in einer vorgegebenen Stellung zu halten und bei Bedarf wieder von dieser Filterposition zu entfernen.

Im vorliegenden Beispiel ist die Aufnahmeeinrichtung 4 im Flüssigkeitsbehälter 3 angeordnet, sodass der jeweilige Flüssigkeitsfilter 5 ebenfalls im Flüssigkeitsbehälter 3 platzierbar ist, vorzugsweise in der Nähe des Auslasses 3-1. Alternativ kann die Aufnahmeeinrichtung 4 natürlich auch anderswo angeordnet sein, beispielsweise derart, dass der Flüssigkeitsfilter 5 im Auslass 3-1 oder zwischen dem Auslass 3-1 und einem Abschnitt der Fluidleitung 12 platzierbar und von dort jeweils wieder entfernbar ist.

Generell ist die Aufnahmeeinrichtung 4 derart ausgebildet, dass, falls ein Flüssigkeitsfilter 5 an der vorgegebenen Filterposition platziert ist, bei einer Zufuhr einer Flüssigkeit vom Flüssigkeitsbehälter 3 in die mindestens eine Fluidleitung 12 zumindest ein Teil der Flüssigkeit den Flüssigkeitsfilter 5 passieren muss (und folglich gefiltert werden kann). Der Flüssigkeitsfilter 5 ist dabei derart ausgebildet, dass er einen mit Filtermaterial gefüllten Bereich umfasst, durch welchen die den Flüssigkeitsfilter 5 passierende Flüssigkeit jeweils fliessen muss. Das Filtermaterial kann beispielsweise aus Absorbermaterialien, welche geeignet sind, in der Flüssigkeit enthaltene Geruchs- und Geschmackstoffe zu absorbieren, und/oder aus Ionenaustauschern, welche zum Entfernen von Kalk oder Metallen aus der Flüssigkeit dienen, bestehen.

Wie ersichtlich, zeigt Fig. 1 die Getränkebereitungsmaschine 1 in einer Situation, in welcher ein Flüssigkeitsfilter 5 von der Aufnahmeeinrichtung 4 aufgenommen ist. Hingegen zeigt Fig. 2 die Getränkebereitungsmaschine 1 in einer Situation, in welcher kein Flüssigkeitsfilter 5 von der Aufnahmeeinrichtung 4 aufgenommen ist, sodass in diesem Fall eine im Flüssigkeitsbehälter 3 bereitgestellte Flüssigkeit der Fluidleitung 12 direkt zugeführt werden kann, ohne einen Flüssigkeitsfilter 5 zu passieren, d.h. ungefiltert.

Wie Fig. 1 und 2 weiterhin andeuten, umfasst die Getränkebereitungsmaschine 1 einen Sensor 6 zum Detektieren eines Flüssigkeitsfilters 5. Der Sensor 6 ist dazu ausgebildet, ein Signal zu erzeugen, welches eine Information darüber enthält, ob ein Flüssigkeitsfilter 5 an der vorgegebenen Filterposition platziert ist. Es sei darauf hingewiesen, dass der Sensor 6 mit konventionellen Mitteln auf vielfältige Weisen realisierbar ist. Beispielsweise kann der Sensor 6 ein berührungsempfindliches Sensorelement umfassen, mit welchem ein Flüssigkeitsfilter 5 zwangsläufig in Kontakt zu bringen ist, wenn der Flüssigkeitsfilter 5 an der vorgegebenen Filterposition platziert werden soll (ein derartiges Sensorelement kann z.B. ein mechanisch betätigbarer elektrischer Schalter, ein kapazitives Messelement oder ein Kraftsensor sein). Alternativ kann der Sensor 6 eine Messeinrichtung umfassen, welche geeignet ist, einen Flüssigkeitsfilter 5 kontaktlos zu detektieren, beispielsweise mit optischen, magnetischen oder elektromagnetischen Mitteln. Es ist auch denkbar, dass jeder für eine Verwendung mit der Getränkebereitungsmaschine 1 bestimmte Flüssigkeitsfilter 5 mit einem Informationsträger versehen ist, welcher den Flüssigkeitsfilter 5 kennzeichnende Informationen enthält, und der Sensor 6 eine Einrichtung umfasst, welche geeignet ist, diese den Flüssigkeitsfilter 5 kennzeichnenden Informationen zu erfassen und auszuwerten. Die den jeweiligen Flüssigkeitsfilter 5 kennzeichnende Informationen können beispielsweise Daten oder Markierungen sein, welche mit elektronischen, optischen, magnetischen oder elektromagnetischen Mitteln lesbar sind; dementsprechend ist als Informationsträger jede beliebige Struktur geeignet, welche derartige Daten oder Markierungen in lesbarer Form enthalten kann (z.B. elektronische, magnetische oder optische Speicherelemente).

Um eine automatische Steuerung eines Betriebs der Getränkebereitungsmaschine 1 zu ermöglichen, ist die Getränkebereitungsmaschine 1 mit einer Steuervorrichtung 25 ausgestattet. Die Steuervorrichtung 25 hat u.a. die Aufgabe, eine Zufuhr einer Flüssigkeit vom Flüssigkeitsbehälter 3 in die Fluidleitung 12 und die Zubereitung von Getränken mittels der Getränke-Zubereitungseinrichtung 10 zu steuern.

Wie Fig. 1 und 2 andeuten, umfasst die Getränke-Zubereitungseinrichtung 10 ein Auslassventil 10-1, welches dazu ausgebildet ist, eine Ausgabe eines mittels der Getränke-Zubereitungseinrichtung 10 zubereiteten Getränks, im vorliegenden Beispiel eines Kaffeegetränks, zu steuern. Für den Fall, dass das Auslassventil 10-1 geschlossen ist, besteht die Möglichkeit, in der Brühkammer der Getränke-Zubereitungseinrichtung 10 Kaffee mit heissem Wasser unter einem vorgegebenen Druck zu brühen und auf diese Weise ein Kaffeegetränk (z.B. Espresso) zuzubereiten. Das Auslassventil 10-1 ist mittels einer Auslassleitung 18 mit einem Getränkeauslass 19 für ein Kaffeegetränk verbunden, sodass ein in der Brühkammer der Getränke-Zubereitungseinrichtung 10 gebrühtes Kaffeegetränk über den Getränkeauslass 19 ausgegeben werden kann, falls das Auslassventil 10-1 geöffnet ist, beispielsweise in ein am Getränkeauslass 19 platziertes Trinkgefäss (wie in Fig. 1 und 2 angedeutet).

Wie Fig. 1 und 2 weiterhin andeuten, ist die Steuervorrichtung 25 über Steuerleitungen 26 mit einer Reihe von Komponenten der Getränkebereitungsmaschine 1 verbunden, insbesondere mit dem Sensor 6, dem Durchflussmesser 13, der Pumpe 14, der Heizeinrichtung 15, dem Umschaltventil 17 und der Getränke-Zubereitungseinrichtung 10, um zur Steuerung eines Betriebs der Getränkebereitungsmaschine 1 geeignete Daten und/oder Signale über die Steuerleitungen 26 zu kommunizieren. Die Steuervorrichtung 25 ist weiterhin mit einem Bedienungselement 30 verbunden, welches es einem Benutzer ermöglicht, Anweisungen zum Betrieb der Getränkebereitungsmaschine 1 an die Steuervorrichtung 25 zu übermitteln. Weiterhin ist an die Steuervorrichtung eine Anzeigeeinrichtung 31 angeschlossen, welche dazu dient, Informationen über einen momentanen Betriebszustand der Getränkebereitungsmaschine 1 und gegebenenfalls Hinweise auf bestimmte, von einem Benutzer vorzunehmende Handlungen anzuzeigen.

Um eine benutzerfreundliche Bedienung zu ermöglichen, ist die Getränkebereitungsmaschine 1 in mehreren Betriebsmodi betreibbar. Dabei ist die Steuervorrichtung 25 gemäss der Erfindung ausgebildet, die Zufuhr einer Flüssigkeit vom Flüssigkeitsbehälter 3 in die mindestens eine Fluidleitung 12 in Abhängigkeit von dem Signal des Sensors 6 zu veranlassen, wobei in mindestens einem der Betriebsmodi die Zufuhr einer Flüssigkeit unabhängig davon veranlassbar ist, ob ein Flüssigkeitsfilter 5 an der vorgegebenen Filterposition platziert ist, und in mindestens einem anderen der Betriebsmodi die Zufuhr einer Flüssigkeit nicht veranlassbar ist, wenn ein Flüssigkeitsfilter 5 an der vorgegebenen Filterposition platziert ist.

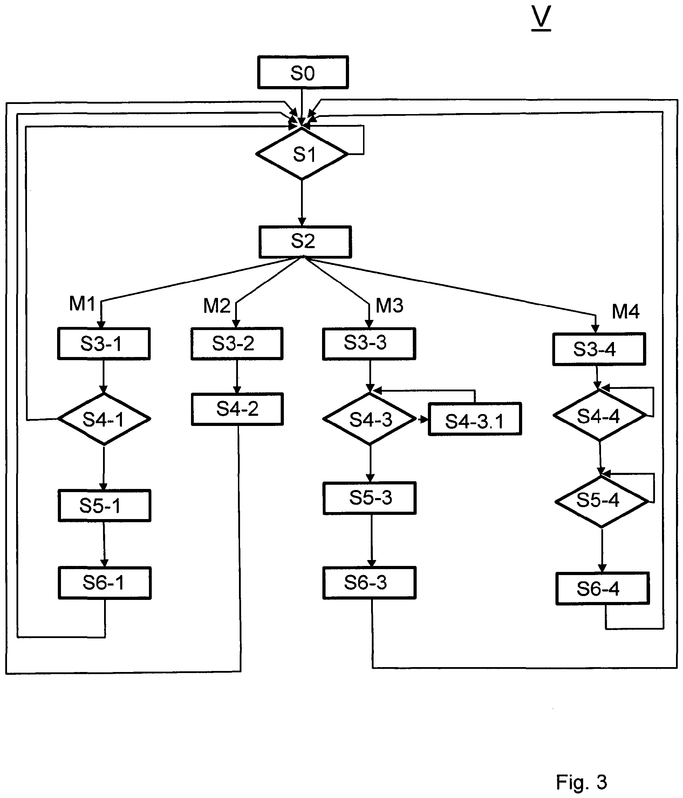

Zur näheren Erläuterung dieses Sachverhalts wird im Folgenden - mit Bezug auf Fig. 3 - ein Beispiel für ein Verfahren V zum Betreiben der Getränkebereitungsmaschine 1 beschrieben. Dieses Beispiel basiert auf der Annahme, dass die Betriebsmodi der Getränkebereitungsmaschine 1 die folgenden Betriebsmodi umfassen:
- einen (ersten) Betriebsmodus M1 zur Erstinbetriebnahme der Getränkebereitungsmaschine,
- einen (zweiten) Betriebsmodus M2 zur Zubereitung eines Getränks,
- einen (dritten) Betriebsmodus M3 zur Reinigung oder Entkalkung der Fluidleitung 12,
- einen (vierten) Betriebsmodus M4 zum Auswechseln eines an der vorgegebenen Filterposition platzierten Flüssigkeitsfilters.

Es sei darauf hingewiesen, dass es gemäss der Erfindung nicht zwingend erforderlich ist, dass die Betriebsmodi genau die vorstehend genannten Betriebsmodi M1-M4 umfassen. Es ist beispielsweise denkbar, dass weniger Betriebsmodi vorhanden sind. Die Getränkebereitungsmaschine 1 wäre auch mit der Erfindung kompatibel, wenn nur zwei der vorstehend genannten Betriebsmodi vorgesehen wären, beispielsweise die Betriebsmodi M2 und M3.

Hinsichtlich des Betriebsmodus M3 wird im Folgenden angenommen, dass im Betriebsmodus M3 - zur Reinigung oder Entkalkung der Fluidleitung 12 - entweder eine Reinigungsflüssigkeit oder eine Entkalkungsflüssigkeit vom Flüssigkeitsbehälter 3 in die Fluidleitung 12 eingelassen werden kann, was implizieren könnte, dass im Betriebsmodus M3 sowohl eine Reinigung der Fluidleitung 12 mit einer Reinigungsflüssigkeit als auch eine Entkalkung der Fluidleitung 12 mit einer Entkalkungsflüssigkeit im Wesentlichen denselben Ablauf haben (abgesehen davon, dass für eine Reinigung bzw. Entkalkung jeweils verschiedene Flüssigkeiten bereitgestellt werden könnten). Mit der Erfindung wäre es auch verträglich, wenn anstelle eines Betriebsmodus M3 für die Durchführung einer Reinigung der Fluidleitung 12 und für die Durchführung einer Entkalkung der Fluidleitung 12 verschiedene Betriebsmodi, z.B. Betriebsmodi mit der Bezeichnung M3' und M3", vorgesehen würden, welche jeweils auf unterschiedliche Weise ablaufen und gegebenenfalls auf unterschiedliche Weise von der Steuervorrichtung 25 gesteuert werden könnten. Der Vollständigkeit halber sei deshalb darauf hingewiesen, dass für jeden der vorstehend genannten Betriebsmodi M3' bzw. M3" hinsichtlich der Steuerung einer Zufuhr einer Flüssigkeit (d.h. einer Reinigungsflüssigkeit bzw. einer Entkalkungsflüssigkeit) vom Flüssigkeitsbehälter 3 in die Fluidleitung 12 dieselben Feststellungen zutreffend wären, welche im Folgenden für den Betriebsmodus M3 genannt sind (zumindest im Hinblick auf die Steuerung der Zufuhr der jeweiligen Flüssigkeiten in Abhängigkeit vom Signal des Sensors 6).

Das Bedienelement 30 umfasst eine (für einen Benutzer zugängliche) Benutzerschnittstelle, welche es einem Benutzer gestattet, aus den zur Verfügung stehenden Betriebsmodi M1-M4 einen Betriebsmodus auszuwählen und zu aktivieren, sodass der Betrieb der Getränkebereitungsmaschine 1 entsprechend dem jeweils aktivierten Betriebsmodus verläuft. Der Betriebsmodus M1 kann bei einer ersten Inbetriebnahme der Getränkebereitungsmaschine 1 von der Steuervorrichtung 25 automatisch (z.B. unmittelbar nach Einschalten der Getränkebereitungsmaschine 1) aktiviert werden. Zu einem späteren Zeitpunkt kann der Betriebsmodus M1 von einem Benutzer mittels des Bedienelements 30 bei Bedarf erneut aktiviert werden.

Die Steuervorrichtung 25 ist derart ausgebildet ist, dass im Betriebsmodus M1 die Zufuhr einer Flüssigkeit (vom Flüssigkeitsbehälter 3 in die Fluidleitung 12) von der Steuervorrichtung 25 automatisch veranlassbar ist, falls ein Flüssigkeitsfilter 5 an der vorgegebenen Filterposition platziert ist. Dadurch wird erreicht, dass ein von der Aufnahmeeinrichtung 4 aufgenommener Flüssigkeitsfilter 5 (bzw. die im Flüssigkeitsfilter 5 enthaltenen Filtermaterialien) automatisch (d.h. ohne weitere Mitwirkung eines Benutzers) mit einer Flüssigkeit (Wasser) gespült werden kann, sobald der Sensor 6 einen Flüssigkeitsfilter 5 detektiert (wie in Fig. 1 dargestellt). Hierdurch wird für einen Benutzer die Inbetriebnahme der Getränkebereitungsmaschine 1 zusammen mit einem Flüssigkeitsfilter 5 vereinfacht.

Weiterhin ist die Steuervorrichtung 25 derart ausgebildet, dass im Betriebsmodus M2 die Zufuhr einer Flüssigkeit (vom Flüssigkeitsbehälter 3 in die Fluidleitung 12) von der Steuervorrichtung 25 unabhängig davon veranlassbar ist, ob ein Flüssigkeitsfilter 5 an der vorgegebenen Filterposition platziert ist. Damit wird erreicht, dass im Betriebsmodus M2 - zur Zubereitung eines Getränks - eine Flüssigkeit (z.B. Wasser) vom Flüssigkeitsbehälter 3 immer zur Getränke-Zubereitungseinrichtung 10 transportiert wird, unabhängig davon, ob der Flüssigkeitsfilter 5 von der Aufnahmeeinrichtung 4 aufgenommen ist oder nicht. Demnach können im Betriebsmodus M2 Getränke wahlweise mit einer gefilterten Flüssigkeit oder mit einer ungefilterten Flüssigkeit zubereitet werden (je nach persönlichen Vorlieben des jeweiligen Benutzers).

Weiterhin ist die Steuervorrichtung 25 derart ausgebildet, dass im Betriebsmodus M3 die Zufuhr einer Flüssigkeit von der Steuervorrichtung 25 nicht veranlassbar ist, wenn ein Flüssigkeitsfilter 5 an der vorgegebenen Filterposition platziert ist. Im Betriebsmodus M3 ist es demnach nur möglich, eine Reinigungsflüssigkeit oder eine Entkalkungsflüssigkeit vom Flüssigkeitsbehälter 3 in die Fluidleitung 12 zu leiten und somit die Fluidleitung 12 zu reinigen bzw. zu entkalken, falls kein Flüssigkeitsfilter 5 von der Aufnahmeeinrichtung 4 aufgenommen ist. Sollte ein Flüssigkeitsfilter 5 an der vorgegebenen Filterposition platziert sein, würde dieser Flüssigkeitsfilter 5 vom Sensor 6 detektiert und die Anwesenheit des Flüssigkeitsfilters 5 von der Steuervorrichtung 25 registriert. Sollte ein Benutzer in diesem Fall irrtümlich eine Reinigungsflüssigkeit oder eine Entkalkungsflüssigkeit im Flüssigkeitsbehälter 3 bereitstellen und den für die Reinigung bzw. die Entkalkung der Fluidleitung 12 bestimmten Betriebsmodus M3 aktivieren, wird die Steuervorrichtung 25 eine Zufuhr der Reinigungsflüssigkeit oder eine Entkalkungsflüssigkeit in die Fluidleitung 12 nicht veranlassen und somit verhindern, dass die Reinigungsflüssigkeit bzw. die Entkalkungsflüssigkeit den Flüssigkeitsfilter 5 passieren und somit mit dem im Flüssigkeitsfilter 5 enthaltenen Filtermaterial in Berührung kommen kann.

Weiterhin ist die Steuervorrichtung 25 derart ausgebildet, dass im Betriebsmodus M4 die Steuervorrichtung 25 mittels einer Auswertung des Signals des Sensors 6 kontinuierlich ermittelt, ob während eines ersten Zeitraums und während eines auf den ersten Zeitraum folgenden zweiten Zeitraums jeweils ein Flüssigkeitsfilter 5 an der vorgegebenen Filterposition platziert ist, und die Steuervorrichtung 25 die Zufuhr einer Flüssigkeit während des zweiten Zeitraums automatisch veranlasst, falls während des ersten Zeitraums kein Flüssigkeitsfilter 5 an der vorgegebenen Filterposition platziert ist und während des zweiten Zweitraums ein Flüssigkeitsfilter 5 an der vorgegebenen Filterposition platziert ist. Auf diese Weise ist die Steuervorrichtung 25 in der Lage, durch Auswertung des Signals des Sensors 6 im ersten und zweiten Zeitraum zu erkennen, ob ein ursprünglich vorhandener (z.B. gebrauchter) Flüssigkeitsfilter 5 von der vorgegebenen Filterposition während des ersten Zeitintervalls entfernt wurde und durch einen anderen (z.B. ungebrauchten) Flüssigkeitsfilter 5 im zweiten Zeitintervall ersetzt wurde. Der im zweiten Zeitintervall an der vorgegebenen Filterposition platzierte Flüssigkeitsfilter 5 wird vom Sensor 6 detektiert und die Anwesenheit des Flüssigkeitsfilters 5 von der Steuervorrichtung 25 registriert. Somit kann die Steuervorrichtung 25 anschliessend eine Zufuhr einer Flüssigkeit (z.B. Wasser) vom Flüssigkeitsbehälter 3 in die Fluidleitung 12 veranlassen und somit bewirken, dass der im zweiten Zeitintervall an der vorgegebenen Filterposition platzierte (ungebrauchte) Flüssigkeitsfilter 5 automatisch mit der Flüssigkeit (Wasser) gespült wird, ohne dass hierfür eine Mitwirkung eines Benutzers erforderlich ist. Hierdurch wird ein Austausch eines gebrauchten Flüssigkeitsfilters 5 für einen Benutzer vereinfacht.

In Fig. 3 ist ein schematisches Ablaufdiagramm für das Verfahren V zum Betreiben der Getränkebereitungsmaschine 1 dargestellt. Das Verfahren V beginnt nach einem Einschalten der Getränkebereitungsmaschine 1 mit einem Schritt SO, in welchem alle Komponenten der Getränkebereitungsmaschine 1, insbesondere die Steuervorrichtung 25 und das Bedienelement 30, in Betriebsbereitschaft versetzt werden, sodass die Steuervorrichtung 25 bereit ist, den folgenden Betrieb der Getränkebereitungsmaschine 1 zu steuern, und ein Benutzer der Getränkebereitungsmaschine 1 gegebenenfalls mittels des Bedienelements 30 Anweisungen an die Steuervorrichtung 25 übermitteln könnte, beispielsweise zur Auswahl eines der Betriebsmodi M1-M4.

In einem auf den Schritt S0 folgenden Schritt S1 überprüft die Steuervorrichtung 25, ob einer der Betriebsmodi ausgewählt ist. Falls dies nicht der Fall ist, kann der Schritt S1 wiederholt werden. Hat ein Benutzer mittels des Bedienelements 30 einen der Betriebsmodi M1-M4 ausgewählt, wird anschliessend ein Schritt S2 ausgeführt, in welchem der jeweils ausgewählte Betriebsmodus aktiviert wird, sodass im Anschluss daran spezifische, dem jeweils aktivierten Betriebsmodus zugeordnete Schritte des Verfahrens V ausgeführt werden können. Falls sich die Getränkebereitungsmaschine 1 beim Schritt S0 in einem Zustand einer ersten Inbetriebnahme ("Erstinbetriebnahme") der Getränkebereitungsmaschine 1 durch einen Benutzer befindet, startet die Steuervorrichtung 25 automatisch den Schritt S2 und aktiviert hierbei den Betriebsmodus M1.

Falls im Schritt S2 der Betriebsmodus M1 aktiviert ist, werden anschliessend zumindest die folgenden Schritte S3-1, S4-1, S5-1 und S6-1 ausgeführt (Fig. 3):
- Im Schritt S3-1 besteht für einen Benutzer die Möglichkeit, bestimmte Betriebsparameter der Getränkebereitungsmaschine 1 (z.B. eine Temperatur eines zuzubereitenden Getränks, eine Grösse einer Portion eines zuzubereitenden Getränks, u.ä.) zu definieren. Die zu definierenden Betriebsparameter werden mittels der Anzeigeeinrichtung 31 dargestellt; für den weiteren Betrieb gültige Werte für die jeweiligen Betriebsparameter können anschliessend von einem Benutzer mittels des Bedienungselements 30 festgelegt werden.
- Im Schritt S4-1 erfasst die Steuervorrichtung 25 das Signal des Sensors 6 und ermittelt, ob ein Flüssigkeitsfilter 5 an der vorgegebenen Filterposition vorhanden ist. Ist kein Flüssigkeitsfilter vorhanden, kann auf den Schritt S4-1 wieder der oben erwähnte Schritt S1 folgen. Falls die Steuervorrichtung 25 ermittelt, dass ein Flüssigkeitsfilter 5 an der vorgegebenen Filterposition vorhanden ist, folgt der Schritt S5-1.
- Im Schritt S5-1 überprüft die Steuervorrichtung 25, ob im Flüssigkeitsbehälter 3 eine Flüssigkeit bereitgestellt ist (mittels einer für diesen Zweck geeigneten Messeinrichtung, welche konventioneller Art sein kann). Ist im Flüssigkeitsbehälter 3 Flüssigkeit bereitgestellt, so veranlasst die Steuervorrichtung 25 (insbesondere durch eine entsprechende Ansteuerung der Pumpe 14) eine Zufuhr der Flüssigkeit vom Flüssigkeitsbehälter 3 in die Fluidleitung 12, sodass die Flüssigkeit den Flüssigkeitsfilter 5 (bzw. das im Flüssigkeitsfilter 5 vorhandene Filtermaterial) passieren und somit eine automatische Spülung des Flüssigkeitsfilters 5 mit der Flüssigkeit bewirken kann. Die Steuervorrichtung 25 steuert weiterhin das Umschaltventil 17 derart, dass eine Fluidverbindung zwischen den Anschlüssen 17-1 und 17-3 besteht, sodass die Flüssigkeit aus der Fluidleitung 12 über die Abflussleitung 21 in die Restflüssigkeitsschale 20 abfliessen kann. Anschliessend wird das Umschaltventil 17 derart angesteuert, dass eine Fluidverbindung zwischen den 17-1 und 17-2 besteht.
- Im Schritt S6-1 wird mittels der Anzeigeeinrichtung 31 eine Information darüber angezeigt, dass der Flüssigkeitsfilter 5 betriebsbereit ist. Anschliessend wird das Verfahren V mit dem oben erwähnten Schritt S1 fortgesetzt.

Falls im Schritt S2 der Betriebsmodus M2 aktiviert ist, werden anschliessend zumindest die folgenden Schritte S3-2 und S4-2 ausgeführt (Fig. 3):
- Im Schritt S3-2 ist das Umschaltventil 17 derart angesteuert, dass eine Fluidverbindung zwischen den Anschlüssen 17-1 und 17-2 besteht. Die Steuervorrichtung 25 veranlasst (insbesondere durch eine entsprechende Ansteuerung der Pumpe 14 und der Getränke-Zubereitungseinrichtung 10) eine Zufuhr der Flüssigkeit vom Flüssigkeitsbehälter 3 in die Fluidleitung 12, sodass die Flüssigkeit zur Getränke-Zubereitungseinrichtung 10 fliessen kann und mittels der Getränke-Zubereitungseinrichtung 10 ein Getränk zubereitet werden kann. Diese Zufuhr der Flüssigkeit wird von der Steuervorrichtung 25 unbeeinflusst vom Signal des Sensors 6 vorgenommen, d.h. unabhängig davon veranlasst, ob ein Flüssigkeitsfilter 5 an der vorgegebenen Filterposition platziert ist oder nicht.
- Im Schritt S4-2 erfolgt eine Ausgabe eines im Schritt S4-1 zubereiteten Getränks durch das (zu diesem Zweck geöffnete) Auslassventil 10-1 und den Getränkeauslass 19. Anschliessend wird das Verfahren V mit dem oben erwähnten Schritt S1 fortgesetzt.

Falls im Schritt S2 der Betriebsmodus M3 aktiviert ist, können anschliessend die folgenden Schritte S3-3, S4-3, S4-3.1, S5-3 und S6-3 ausgeführt werden (Fig. 3):
- Im Schritt S3-3 bietet die Steuervorrichtung 25 einem Benutzer die Möglichkeiten, Vorbereitungen für eine Entkalkung oder Reinigung der Fluidleitung 12 zu treffen: Der Benutzer hat beispielsweise die Gelegenheit, eine für eine Entkalkung bzw. Reinigung benötigte Entkalkungs- bzw. Reinigungsflüssigkeit im Flüssigkeitsbehälter 3 bereitstellen oder einen Flüssigkeitsfilter 5, welcher möglicherweise an der vorgegebenen Filterposition platziert sein könnte, zu entfernen. Anschliessend kann das Verfahren mit dem Schritt S4-3 fortgesetzt werden. Dabei kann das Verfahren V derart ausgelegt sein, dass der Benutzer der Steuervorrichtung 25 mittels des Bedienungselements 30 die Information übermittelt, dass die erwähnten Vorbereitungen für die Entkalkung bzw. Reinigung aus Sicht des Benutzers beendet sind. Anschliessend erfolgt die Ausführung des Schritts S4-3.
- Im Schritt S4-3 erfasst die Steuervorrichtung 25 das Signal des Sensors 6 und ermittelt, ob ein Flüssigkeitsfilter 5 an der vorgegebenen Filterposition platziert ist. Falls das Ergebnis dieser Ermittlung ist, dass kein Flüssigkeitsfilter 5 an der vorgegebenen Filterposition platziert ist, wird das Verfahren V mit dem Schritt S5-3 fortgesetzt. Falls das Ergebnis dieser Ermittlung ist, dass an der vorgegebenen Filterposition ein Flüssigkeitsfilter 5 platziert ist, wird das Verfahren V mit dem Schritt S5-3.1 fortgesetzt.
- Im Schritt S4-3.1 wird von der Steuervorrichtung 25 keine Zufuhr einer Flüssigkeit vom Flüssigkeitsbehälter 3 in die Fluidleitung 12 ermöglicht bzw. veranlasst, sodass keine Flüssigkeit einen an der vorgegebenen Filterposition platzierten Flüssigkeitsfilter 5 passieren kann. Anschliessend (z.B. nach einer vorgegebenen Zeitspanne) kann das Verfahren V mit dem Schritt S4-3 fortgesetzt werdend (wie in Fig. 3 dargestellt). Alternativ kann für einen Benutzer die Möglichkeit vorgesehen sein, den Betrieb im Betriebsmodus M3 (durch eine entsprechende Bedienung des Bedienelements 30) zu beenden und das Verfahren V mit dem Schritt S1 fortzusetzen. Ausserdem kann das Verfahren V so durchführt werden, dass im Schritt S4-3.1 mittels der Anzeigeeinrichtung 31 eine Aufforderung an einen Benutzer kommuniziert wird, den Flüssigkeitsfilter 5 von der vorgegebenen Filterposition zu entfernen.
- Im Schritt S5-3 veranlasst die Steuervorrichtung 25 (beispielsweise durch eine entsprechende Ansteuerung der Pumpe 14) eine Zufuhr einer vorgegebenen Menge einer im Flüssigkeitsbehälter 3 bereitgestellten Entkalkungs- oder Reinigungsflüssigkeit in die Fluidleitung 12. Dabei kann das Umschaltventil 17 derart angesteuert werden, dass eine Fluidverbindung zwischen den Anschlüssen 17-1 und 17-3 besteht, sodass die der Fluidleitung 12 zugeführte Flüssigkeit über die Abflussleitung 21 in die Restflüssigkeitsschale 20 abfliessen kann. Alternativ kann das Umschaltventil 17 auch derart angesteuert werden, dass eine Fluidverbindung zwischen den Anschlüssen 17-1 und 17-2 besteht, sodass die der Fluidleitung 12 zugeführte Flüssigkeit über die Getränke-Zubereitungseinrichtung 10 und den Getränkeauslass 19 abfliessen kann. Letzteres ermöglicht eine Entkalkung bzw. Reinigung der Getränke-Zubereitungseinrichtung 10, der Auslassleitung 18 und des Getränkeauslasses 19 (zusätzlich zu einer Entkalkung bzw. Reinigung der Fluidleitung 12).
- Im Schritt S6-3 wird - nach dem Ende der Entkalkung bzw. Reinigung gemäss Schritt S5-3 - einem Benutzer die Gelegenheit gegeben, die Fluidleitung 12 und gegebenenfalls die Getränke-Zubereitungseinrichtung 10, die Auslassleitung 18 und den Getränkeauslass 19 von möglicherweise vorhandenen Resten der Entkalkungs- oder Reinigungsflüssigkeit, welche nach der Entkalkung bzw. Reinigung gemäss Schritt S5-3 vorhanden sein könnten, durch Spülen mit Wasser oder einer anderen für diesen Zweck geeigneten Spülflüssigkeit zu befreien. Zu diesem Zweck kann der Benutzer im Behälter 3 eine geeignete Spülflüssigkeit bereitstellen. Nach erfolgter Bereitstellung dieser Spülflüssigkeit veranlasst die Steuervorrichtung 25 (beispielsweise durch eine entsprechende Ansteuerung der Pumpe 14) eine Zufuhr einer vorgegebenen Menge der im Flüssigkeitsbehälter 3 bereitgestellten Spülflüssigkeit in die Fluidleitung 12. Die auf diese Weise zugeführte Spülflüssigkeit kann wahlweise über die Abflussleitung 21 oder den Getränkeauslass 19 abfliessen (abhängig von der Stellung der Umschaltventils 17). Anschliessend kann das Verfahren V mit dem Schritt S1 fortgesetzt werden.

Falls im Schritt S2 der Betriebsmodus M4 aktiviert ist, können anschliessend die folgenden Schritte S3-4, S4-4, S5-4 und S6-4 ausgeführt werden (Fig. 3):
- Im Schritt S3-4 wird mittels der Anzeigeeinrichtung 31 eine Aufforderung an einen Benutzer kommuniziert, einen an der vorgegebenen Filterposition platzierten (d.h. im Gebrauch befindlichen) Flüssigkeitsfilter 5 auszutauschen.
- Im Schritt S4-4 erfasst die Steuervorrichtung 25 das Signal des Sensors 6 und ermittelt, ob ein Flüssigkeitsfilter 5 in einem vorgegebenen ersten Zeitraum nach Beginn des Schrittes S4-4 an der vorgegebenen Filterposition platziert ist. Falls das Ergebnis dieser Ermittlung ist, dass in dem ersten Zeitraum kein Flüssigkeitsfilter 5 an der vorgegebenen Filterposition platziert ist, wird das Verfahren V mit dem Schritt S5-4 fortgesetzt, zumal das Signal des Sensors 6 offenbar anzeigt, dass nach Ausführung des Schrittes S3-4 offenbar der Flüssigkeitsfilter 5, welcher im Schritt S3-4 vom Sensor 6 an der der vorgegebenen Filterposition detektiert wurde, nicht mehr an der vorgegebenen Filterposition platziert ist und somit entfernt wurde. Falls das Ergebnis der erwähnten Ermittlung ist, dass in dem ersten Zeitraum ein Flüssigkeitsfilter 5 an der vorgegebenen Filterposition platziert ist, wird der Schritt S4-4 einmal oder mehrmals wiederholt (bis die Ermittlung zum Ergebnis führt, dass kein Flüssigkeitsfilter 5 an der vorgegebenen Filterposition platziert ist, sodass das Verfahren V - wie oben erwähnt - mit dem Schritt S5-4 fortgesetzt werden kann).
- Im Schritt S5-4 erfasst die Steuervorrichtung 25 das Signal des Sensors 6 und ermittelt, ob ein Flüssigkeitsfilter 5 in einem vorgegebenen zweiten Zeitraum nach Beginn des Schrittes S5-4 an der vorgegebenen Filterposition platziert ist. Falls das Ergebnis dieser Ermittlung ist, dass in dem zweiten Zeitraum ein Flüssigkeitsfilter 5 an der vorgegebenen Filterposition platziert ist, wird das Verfahren V mit dem Schritt S6-4 fortgesetzt. Falls das Ergebnis der Ermittlung ist, dass in dem zweiten Zeitraum kein Flüssigkeitsfilter 5 an der vorgegebenen Filterposition platziert ist, wird der Schritt S5-4 einmal oder mehrmals wiederholt (bis die Ermittlung zum Ergebnis führt, dass ein Flüssigkeitsfilter 5 an der vorgegebenen Filterposition platziert ist, sodass das Verfahren V - wie oben erwähnt - mit dem Schritt S6-4 fortgesetzt werden kann).
- Im Schritt S6-4 überprüft die Steuervorrichtung 25, ob im Flüssigkeitsbehälter 3 eine Flüssigkeit bereitgestellt ist. Ist im Flüssigkeitsbehälter 3 Flüssigkeit bereitgestellt, so veranlasst die Steuervorrichtung 25 (durch eine entsprechende Ansteuerung der Pumpe 14) eine Zufuhr der Flüssigkeit vom Flüssigkeitsbehälter 3 in die Fluidleitung 12, sodass die Flüssigkeit den Flüssigkeitsfilter 5 passieren und somit eine automatische Spülung des Flüssigkeitsfilters 5 mit der Flüssigkeit bewirken kann. Die Steuervorrichtung 25 steuert weiterhin das Umschaltventil 17 derart, dass eine Fluidverbindung zwischen den Anschlüssen 17-1 und 17-3 besteht, sodass die Flüssigkeit aus der Fluidleitung 12 über die Abflussleitung 21 in die Restflüssigkeitsschale 20 abfliessen kann. Anschliessend wird das Umschaltventil 17 derart angesteuert, dass eine Fluidverbindung zwischen den 17-1 und 17-2 besteht. Anschliessend kann das Verfahren V mit dem Schritt S1 fortgesetzt werden.

## Patentansprüche

1. Getränkebereitungsmaschine (1) zum Bereiten eines Getränks, welche in mehreren Betriebsmodi (M1, M2, M3, M4) betreibbar ist und umfasst:
einen Flüssigkeitsbehälter (3) für eine Flüssigkeit,
eine Getränke-Zubereitungseinrichtung (10) zur Zubereitung des Getränks mittels einer Flüssigkeit,
mindestens eine Fluidleitung (12), welche mit dem Flüssigkeitsbehälter (3) und der Getränke-Zubereitungseinrichtung (10) verbunden ist, um eine Zufuhr einer Flüssigkeit vom Flüssigkeitsbehälter (3) zur Getränke-Zubereitungseinrichtung (10) durch die mindestens eine Fluidleitung (12) zu ermöglichen,
eine Aufnahmeeinrichtung (4) zum Aufnehmen eines Flüssigkeitsfilters (5), welcher an einer vorgegebenen Filterposition platzierbar und wieder entfernbar ist,
einen Sensor (6) zum Detektieren eines Flüssigkeitsfilters (5) und
eine Steuervorrichtung (25) zum Steuern einer Zufuhr einer Flüssigkeit vom Flüssigkeitsbehälter (3) in die mindestens eine Fluidleitung (12),
wobei die Aufnahmeeinrichtung (4) derart ausgebildet ist, dass unabhängig davon, ob ein Flüssigkeitsfilter (5) an der vorgegebenen Filterposition platziert ist, eine Zufuhr einer Flüssigkeit vom Flüssigkeitsbehälter (3) zur Getränke-Zubereitungseinrichtung (10) durch die mindestens eine Fluidleitung (12) möglich ist, und dass, falls ein Flüssigkeitsfilter (5) an der vorgegebenen Filterposition platziert ist, bei einer Zufuhr einer Flüssigkeit vom Flüssigkeitsbehälter (3) in die mindestens eine Fluidleitung (12) zumindest ein Teil der Flüssigkeit den Flüssigkeitsfilter (5) passieren muss, und
wobei der Sensor (6) dazu ausgebildet ist, ein Signal zu erzeugen, welches eine Information darüber enthält, ob ein Flüssigkeitsfilter (5) an der vorgegebenen Filterposition platziert ist,
**dadurch gekennzeichnet, dass**
die Steuervorrichtung (25) dazu ausgebildet ist, die Zufuhr einer Flüssigkeit vom Flüssigkeitsbehälter (3) in die mindestens eine Fluidleitung (12) in Abhängigkeit von dem Signal des Sensors (6) zu veranlassen,
wobei die Steuereinrichtung (25) ferner dazu ausgebildet ist, dass sie
in mindestens einem der Betriebsmodi (M2) die Zufuhr einer Flüssigkeit unabhängig davon veranlasst, ob ein Flüssigkeitsfilter (5) an der vorgegebenen Filterposition platziert ist, und
in mindestens einem anderen der Betriebsmodi (M3) die Zufuhr einer Flüssigkeit ausschliesslich dann veranlasst, wenn kein Flüssigkeitsfilter (5) an der vorgegebenen Filterposition platziert ist.

2. Getränkebereitungsmaschine (1) nach Anspruch 1, wobei
die Betriebsmodi zumindest zwei der folgenden Betriebsmodi a)-d) umfassen:
a) einen ersten Betriebsmodus (M1) zur Erstinbetriebnahme der Getränkebereitungsmaschine, und/oder
b) einen zweiten Betriebsmodus (M2) zur Zubereitung eines Getränks,
c) einen dritten Betriebsmodus (M3) zur Reinigung oder Entkalkung der mindestens einen Fluidleitung (12),
d) einen vierten Betriebsmodus (M4) zum Auswechseln eines an der vorgegebenen Filterposition platzierten Flüssigkeitsfilters (5).

3. Getränkebereitungsmaschine (1) nach Patentanspruch 2,
wobei die Steuervorrichtung (25) derart ausgebildet ist, dass im zweiten Betriebsmodus (M2) die Zufuhr einer Flüssigkeit von der Steuervorrichtung (25) unabhängig davon veranlassbar ist, ob ein Flüssigkeitsfilter (5) an der vorgegebenen Filterposition platziert ist.

4. Getränkebereitungsmaschine (1) nach Patentanspruch 2,
wobei
die Steuervorrichtung (25) derart ausgebildet ist, dass im dritten Betriebsmodus (M3) die Zufuhr einer Flüssigkeit von der Steuervorrichtung (25) nicht veranlassbar ist, wenn ein Flüssigkeitsfilter (5) an der vorgegebenen Filterposition platziert ist.

5. Getränkebereitungsmaschine (1) nach Patentanspruch 2,
wobei
die Steuervorrichtung (25) derart ausgebildet ist, dass im ersten Betriebsmodus (M1) die Zufuhr einer Flüssigkeit von der Steuervorrichtung (25) automatisch veranlassbar ist, falls ein Flüssigkeitsfilter (5) an der vorgegebenen Filterposition platziert ist, um eine automatische Spülung des Flüssigkeitsfilters (5) mit der Flüssigkeit zu bewirken.

6. Getränkebereitungsmaschine (1) nach Patentanspruch 2,
wobei
die Steuervorrichtung (25) derart ausgebildet ist, dass im vierten Betriebsmodus (M4) die Steuervorrichtung (25) mittels einer Auswertung des Signals des Sensors (6) kontinuierlich ermittelt, ob während eines ersten Zeitraums und während eines auf den ersten Zeitraum folgenden zweiten Zeitraums jeweils ein Flüssigkeitsfilter (5) an der vorgegebenen Filterposition platziert ist, und die Steuervorrichtung (25) die Zufuhr einer Flüssigkeit während des zweiten Zeitraums automatisch veranlasst, falls während des ersten Zeitraums kein Flüssigkeitsfilter (5) an der vorgegebenen Filterposition platziert ist und während des zweiten Zweitraums ein Flüssigkeitsfilter (5) an der vorgegebenen Filterposition platziert ist.

7. Getränkebereitungsmaschine (1) nach einem der Ansprüche 1-6, welche ein Bedienelement (30) zum Auswählen eines Betriebsmodus aus den mehreren Betriebsmodi (M1, M2, M3, M4) aufweist.

8. Verfahren (V) zum Betreiben einer Getränkebereitungsmaschine (1) zum Bereiten eines Getränks,
welche Getränkebereitungsmaschine (1) in mehreren Betriebsmodi (M1, M2, M3, M4) betreibbar ist und umfasst: einen Flüssigkeitsbehälter (3) für eine Flüssigkeit,
eine Getränke-Zubereitungseinrichtung (10) zur Zubereitung des Getränks mittels einer Flüssigkeit, mindestens eine Fluidleitung (12), welche mit dem Flüssigkeitsbehälter (3) und der Getränke-Zubereitungseinrichtung (10) verbunden ist, um eine Zufuhr einer Flüssigkeit vom Flüssigkeitsbehälter (3) zur Getränke-Zubereitungseinrichtung (10) durch die mindestens eine Fluidleitung (12) zu ermöglichen,
eine Aufnahmeeinrichtung (4) zum Aufnehmen eines Flüssigkeitsfilters (5), welcher an einer vorgegebenen Filterposition platzierbar und wieder entfernbar ist,
einen Sensor (6) zum Detektieren eines Flüssigkeitsfilters (5) und
eine Steuervorrichtung (25) zum Steuern einer Zufuhr einer Flüssigkeit vom Flüssigkeitsbehälter (3) in die mindestens eine Fluidleitung (12),
wobei die Aufnahmeeinrichtung (4) derart ausgebildet ist, dass unabhängig davon, ob ein Flüssigkeitsfilter (5) an der vorgegebenen Filterposition platziert ist, eine Zufuhr einer Flüssigkeit vom Flüssigkeitsbehälter (3) zur Getränke-Zubereitungseinrichtung (10) durch die mindestens eine Fluidleitung (12) möglich ist, und dass, falls ein Flüssigkeitsfilter (5) an der vorgegebenen Filterposition platziert ist, bei der Zufuhr einer Flüssigkeit vom Flüssigkeitsbehälter (3) in die mindestens eine Fluidleitung (12) zumindest ein Teil der Flüssigkeit den Flüssigkeitsfilter (5) passieren muss, und
wobei der Sensor (6) dazu ausgebildet ist, ein Signal zu erzeugen, welches eine Information darüber enthält, ob ein Flüssigkeitsfilter (5) an der vorgegebenen Filterposition platziert ist,
welches Verfahren (V) die folgenden Schritte umfasst:
Aktivieren (S2) eines der Betriebsmodi (M1, M2, M3, M4) der Getränkebereitungsmaschine (1), wobei die Betriebsmodi zumindest einen Betriebsmodus (M2) zur Zubereitung eines Getränks und einen Betriebsmodus (M3) zur Reinigung oder Entkalkung der mindestens einen Fluidleitung (12) umfassen,
Auswerten (S4-1, S4-3, S4-4, S5-4) eines Signals des Sensors (6) mittels der Steuervorrichtung (25), wobei die Steuervorrichtung (25) ermittelt, ob ein Flüssigkeitsfilter (5) an der vorgegebenen Filterposition platziert ist, und eine Zufuhr einer Flüssigkeit vom Flüssigkeitsbehälter (3) in die mindestens eine Fluidleitung (12) steuert,
**dadurch gekennzeichnet, dass**
die Steuervorrichtung (25)
für den Fall, dass der Betriebsmodus (M2) zur Zubereitung eines Getränks aktiviert wird, die Zufuhr einer Flüssigkeit vom Flüssigkeitsbehälter (3) in die mindestens eine Fluidleitung (12) unabhängig davon veranlasst, ob ein Flüssigkeitsfilter (5) an der vorgegebenen Filterposition platziert ist, und
für den Fall, dass der Betriebsmodus (M3) zur Reinigung oder Entkalkung der mindestens einen Fluidleitung (12) aktiviert wird, die Zufuhr einer Flüssigkeit vom Flüssigkeitsbehälter (3) in die mindestens eine Fluidleitung (12) ausschliesslich dann veranlasst, wenn kein Flüssigkeitsfilter (5) an der vorgegebenen Filterposition platziert ist.

9. Verfahren (V) nach Anspruch 8, wobei
die Betriebsmodi (M1, M2, M3, M4) einen Betriebsmodus (M1) zur Erstinbetriebnahme der Getränkebereitungsmaschine (1) umfassen und
die Steuervorrichtung (25) nach einer Aktivierung des Betriebsmodus (M1) zur Erstinbetriebnahme der Getränkebereitungsmaschine (1) durch Auswerten des Signals des Sensors (6) ermittelt, ob ein Flüssigkeitsfilter (5) an der vorgegebenen Filterposition platziert ist, und eine Zufuhr einer Flüssigkeit vom Flüssigkeitsbehälter (3) in die mindestens eine Fluidleitung (12) veranlasst, sofern das Auswerten des Signals des Sensors (6) ergibt, dass ein Flüssigkeitsfilter (5) an der vorgegebenen Filterposition platziert ist.

10. Verfahren (V) nach einem der Ansprüche 8 oder 9,
wobei die Betriebsmodi (M1, M2, M3, M4) einen Betriebsmodus (M4) zum Auswechseln eines an der vorgegebenen Filterposition platzierten Flüssigkeitsfilters (5) umfassen und
die Steuervorrichtung (25) nach einer Aktivierung des Betriebsmodus (M4) zum Auswechseln eines an der vorgegebenen Filterposition platzierten Flüssigkeitsfilters (5) durch Auswerten des Signals des Sensors (6) ermittelt, ob während eines ersten Zeitraums und während eines auf den ersten Zeitraum folgenden zweiten Zeitraums jeweils ein Flüssigkeitsfilter (5) an der vorgegebenen Filterposition platziert ist, und die Steuervorrichtung (25) die Zufuhr einer Flüssigkeit während des zweiten Zeitraums automatisch veranlasst, falls während des ersten Zeitraums kein Flüssigkeitsfilter (5) an der vorgegebenen Filterposition platziert ist und während des zweiten Zweitraums ein Flüssigkeitsfilter (5) an der vorgegebenen Filterposition platziert ist.

11. Verfahren (V) nach Anspruch 8, wobei
für den Fall, dass der Betriebsmodus (M3) zur Reinigung oder Entkalkung der mindestens einen Fluidleitung (12) aktiviert wird und die Steuervorrichtung (25) durch Auswerten eines Signals des Sensors (6) ermittelt, dass ein Flüssigkeitsfilter (5) an der vorgegebenen Filterposition platziert ist, die Steuervorrichtung (25) an eine Anzeigeeinrichtung (31) eine von der Anzeigeeinrichtung (1) darstellbare Information darüber übermittelt, dass ein Flüssigkeitsfilter (5) an der vorgegebenen Filterposition platziert ist und/oder keine Zufuhr einer Flüssigkeit vom Flüssigkeitsbehälter (3) in die mindestens eine Fluidleitung (12) veranlasst wird.

12. Verfahren (V) nach Anspruch 11, wobei
die Steuervorrichtung (25) durch Auswerten eines Signals des Sensors (6) während eines Zeitraums ermittelt, ob der Flüssigkeitsfilter (5) an der vorgegebenen Filterposition weiterhin vorhanden ist, und die Steuervorrichtung (25) eine Zufuhr einer Flüssigkeit vom Flüssigkeitsbehälter (3) in die mindestens eine Fluidleitung (12) veranlasst, sobald das Auswerten des Signals ergibt, dass der Flüssigkeitsfilter (5) von der vorgegebenen Filterposition entfernt ist.

## Claims

1. Drinks preparation machine (1) for preparing a drink which can be operated in multiple operating modes (M1, M2, M3, M4) and comprises:
a liquid container (3) for a liquid,
a drinks preparation device (10) for preparing the drink using a liquid,
at least one fluid line (12) which is connected to the liquid container (3) and the drinks preparation device (10) in order to permit a supply of a liquid from the liquid container (3) to the drinks preparation device (10) through the at least one fluid line (12),
a receiving device (4) for receiving a liquid filter (5) which is able to be placed in a predetermined filter position and removed again therefrom,
a sensor (6) for detecting a liquid filter (5) and
a control device (25) for controlling a supply of a liquid from the liquid container (3) into the at least one fluid line (12),
wherein the receiving device (4) is configured such that, independently of whether a liquid filter (5) is placed in the predetermined filter position, a supply of a liquid from the liquid container (3) to the drinks preparation device (10) is possible through the at least one fluid line (12), and such that, if a liquid filter (5) is placed in the predetermined filter position, with a supply of a liquid from the liquid container (3) into the at least one fluid line (12), at least one portion of the liquid has to pass through the liquid filter (5), and
wherein the sensor (6) is configured to produce a signal which contains information about whether a liquid filter (5) is placed in the predetermined filter position,
**characterized in that**
the control device (25) is designed to prompt the supply of a liquid from the liquid container (3) into the at least one fluid line (12) as a function of the signal of the sensor (6),
wherein the control device (25) is further configured such that
in at least one of the operating modes (M2) it prompts the supply of a liquid independently of whether a liquid filter (5) is placed in the predetermined filter position, and
in at least one other of the operating modes (M3) it then prompts the supply of a liquid exclusively when no liquid filter (5) is placed in the predetermined filter position.

2. Drinks preparation machine (1) according to Claim 1, wherein the operating modes comprise at least two of the following operating modes a)-d):
a) a first operating mode (M1) for the start-up of the drinks preparation machine, and/or
b) a second operating mode (M2) for preparing a drink,
c) a third operating mode (M3) for cleaning or descaling the at least one fluid line (12),
d) a fourth operating mode (M4) for replacing a liquid filter (5) placed in the predetermined filter position.

3. Drinks preparation machine (1) according to Claim 2, wherein the control device (25) is configured such that in the second operating mode (M2) the supply of a liquid is able to be prompted by the control device (25) independently of whether a liquid filter (5) is placed in the predetermined filter position.

4. Drinks preparation machine (1) according to Claim 2, wherein
the control device (25) is configured such that in the third operating mode (M3) the supply of a liquid is not able to be prompted by the control device (25) if a liquid filter (5) is placed in the predetermined filter position.

5. Drinks preparation machine (1) according to Claim 2, wherein
the control device (25) is configured such that in the first operating mode (M1) the supply of a liquid is able to be prompted automatically by the control device (25) if a liquid filter (5) is placed in the predetermined filter position in order to effect an automatic rinsing of the liquid filter (5) by the liquid.

6. Drinks preparation machine (1) according to Claim 2, wherein
the control device (25) is configured such that in the fourth operating mode (M4) the control device (25) continuously determines by means of an evaluation of the signal of the sensor (6) whether during a first time period and during a second time period following the first time period in each case a liquid filter (5) is placed in the predetermined filter position, and the control device (25) automatically prompts the supply of a liquid during the second time period if during the first time period no liquid filter (5) is placed in the predetermined filter position and during the second time period a liquid filter (5) is placed in the predetermined filter position.

7. Drinks preparation machine (1) according to one of Claims 1-6, which has an operating element (30) for selecting an operating mode from the multiple operating modes (M1, M2, M3, M4).

8. Method (V) for operating a drinks preparation machine (1) for preparing a drink,
which drinks preparation machine (1) is able to be operated in multiple operating modes (M1, M2, M3, M4) and comprises:
a liquid container (3) for a liquid,
a drinks preparation device (10) for preparing the drink using a liquid,
at least one fluid line (12) which is connected to the liquid container (3) and the drinks preparation device (10) in order to permit a supply of a liquid from the liquid container (3) to the drinks preparation device (10) through the at least one fluid line (12),
a receiving device (4) for receiving a liquid filter (5) which is able to be placed in a predetermined filter position and removed again therefrom,
a sensor (6) for detecting a liquid filter (5) and
a control device (25) for controlling a supply of a liquid from the liquid container (3) into the at least one fluid line (12),
wherein the receiving device (4) is configured such that independently of whether a liquid filter (5) is placed in the predetermined filter position, a supply of a liquid from the liquid container (3) to the drinks preparation device (10) is possible through the at least one fluid line (12) and such that, if a liquid filter (5) is placed in the predetermined filter position, with a supply of a liquid from the liquid container (3) into the at least one fluid line (12), at least one portion of the liquid has to pass through the liquid filter (5), and
wherein the sensor (6) is configured to produce a signal which contains information about whether a liquid filter (5) is placed in the predetermined filter position,
which method (V) comprises the following steps:
activating (S2) one of the operating modes (M1, M2, M3, M4) of the drinks preparation machine (1), wherein the operating modes comprise at least one operating mode (M2) for preparing a drink and one operating mode (M3) for cleaning or descaling the at least one fluid line (12),
evaluating (S4-1, S4-3, S4-4, S5-4) a signal of the sensor (6) by means of the control device (25), wherein the control device (25) determines whether a liquid filter (5) is placed in the predetermined filter position and controls a supply of a liquid from the liquid container (3) into the at least one fluid line (12),
**characterized in that**
the control device (25)
in the event that the operating mode (M2) for preparing a drink is activated, prompts the supply of a liquid from the liquid container (3) into the at least one fluid line (12) independently of whether a liquid filter (5) is placed in the predetermined filter position and
in the event that the operating mode (M3) for cleaning or descaling the at least one fluid line (12) is activated, prompts the supply of a liquid from the liquid container (3) into the at least one fluid line (12) exclusively when no liquid filter (5) is placed in the predetermined filter position.

9. Method (V) according to Claim 8, wherein
the operating modes (M1, M2, M3, M4) comprise an operating mode (M1) for the start-up of the drinks preparation machine (1) and
the control device (25), after an activation of the operating mode (M1) for the start-up of the drinks preparation machine (1), by evaluating the signal of the sensor (6) determines whether a liquid filter (5) is placed in the predetermined filter position and prompts a supply of a liquid from the liquid container (3) into the at least one fluid line (12), provided the evaluation of the signal of the sensor (6) results that a liquid filter (5) is placed in the predetermined filter position.

10. Method (V) according to one of Claims 8 or 9,
wherein the operating modes (M1, M2, M3, M4) comprise an operating mode (M4) for replacing a liquid filter (5) placed in the predetermined filter position and
the control device (25), after an activation of the operating mode (M4) for replacing one of the liquid filters (5) placed in the predetermined filter position, by evaluating the signal of the sensor (6) determines whether during a first time period and during a second time period following the first time period in each case a liquid filter (5) is placed in the predetermined filter position and the control device (25) automatically prompts the supply of a liquid during the second time period if during the first time period no liquid filter (5) is placed in the predetermined filter position and during the second time period a liquid filter (5) is placed in the predetermined filter position.

11. Method (V) according to Claim 8, wherein
in the event that the operating mode (M3) for cleaning or descaling the at least one fluid line (12) is activated and the control device (25) determines, by evaluating a signal of the sensor (6), that a liquid filter (5) is placed in the predetermined filter position, the control device (25) transmits to a display device (31) information on that a liquid filter (5) is placed in the predetermined filter position and/or no supply of liquid from the liquid container (3) into the at least one fluid line (12) is prompted, said information being able to be shown by the display device (1).

12. Method (V) according to Claim 11, wherein
the control device (25), by evaluating a signal of the sensor (6) during a time period, determines whether the liquid filter (5) is still present in the predetermined filter position, and the control device (25) prompts a supply of a liquid from the liquid container (3) into the at least one fluid line (12), as soon as the evaluation of the signal results that the liquid filter (5) is removed from the predetermined filter position.

## Revendications

1. Machine de préparation de boissons (1) destinée à préparer une boisson, laquelle peut fonctionner dans plusieurs modes de fonctionnement (M1, M2, M3, M4) et comprend :
un réservoir à liquide (3) pour un liquide,
un système préparateur de boissons (10) pour la préparation de la boisson au moyen d'un liquide,
au moins un conduit à fluide (12), lequel est relié avec le réservoir à liquide (3) et le système préparateur de boissons (10) pour permettre une alimentation d'un liquide du réservoir à liquide (3) vers le système préparateur de boissons (10), via l'au moins un conduit à fluide (12),
un système de logement (4) pour loger un filtre à liquide (5), lequel peut se placer dans une position de filtrage prédéfinie et se retirer par la suite,
un capteur (6) destiné à détecter un filtre à liquide (5) et
un dispositif de commande (25) destiné à commander une alimentation d'un liquide du réservoir à liquide (3) dans l'au moins un conduit à fluide (12),
le système de logement (4) étant conçu de telle sorte qu' indépendamment du fait si un filtre à liquide (5) est placé dans la position de filtrage prédéfinie, une alimentation d'un liquide du réservoir à liquide (3) vers le système préparateur de boissons (10) via l'au moins un conduit à fluide (12) soit possible, et que si un filtre à liquide (5) est placé dans la position de filtrage prédéfinie, lors d'une alimentation d'un liquide du réservoir à liquide (3) dans l'au moins un conduit à fluide (12), au moins une partie du liquide doive passer le filtre à liquide (5) et
le capteur (6) étant conçu pour générer un signal, lequel contient une information sur le fait si un filtre à liquide (5) est placé dans la position de filtrage prédéfinie,
**caractérisée en ce que**
le dispositif de commande (25) est conçu pour initier l'alimentation d'un liquide du réservoir à liquide (3) dans l'au moins un conduit à fluide (12) en fonction du signal du capteur (6),
le système de commande (25) étant conçu par ailleurs
pour initier l'alimentation d'un liquide dans au moins l'un des modes de fonctionnement (M2), indépendamment du fait si un filtre à liquide (5) est placé dans la position de filtrage prédéfinie, et
pour initier l'alimentation d'un liquide dans au moins un autre des modes de fonctionnement (M3) exclusivement si aucun filtre à liquide (5) n'est placé dans la position de filtrage prédéfinie.

2. Machine de préparation de boissons (1) selon la revendication 1, les modes de fonctionnement comprenant au moins deux des modes de fonctionnement a) à d) suivants :
a) un premier mode de fonctionnement (M1) pour la première mise en service de la machine de préparation de boissons, et/ou
b) un deuxième mode de fonctionnement (M2) pour la préparation d'une boisson,
c) un troisième mode de fonctionnement (M3) pour le nettoyage ou le détartrage de l'au moins un conduit à fluide (12),
d) un quatrième mode de fonctionnement (M4) pour le remplacement d'un filtre à liquide (5) placé dans la position de filtrage prédéfinie.

3. Machine de préparation de boissons (1) selon la revendication 2,
le dispositif de commande (25) étant conçu de telle sorte pour que dans le deuxième mode de fonctionnement (M2), l'alimentation d'un liquide puisse être initiée par le dispositif de commande (25), indépendamment du fait si un filtre à liquide (5) est placé dans la position de filtrage prédéfinie.

4. Machine de préparation de boissons (1) selon la revendication 2,
le dispositif de commande (25) étant conçu de telle sorte, que dans le troisième mode de fonctionnement (M3), l'alimentation d'un liquide ne puisse pas être initiée par le dispositif de commande (25) si un filtre à liquide (5) est placé dans la position de filtrage prédéfinie.

5. Machine de préparation de boissons (1) selon la revendication 2,
le dispositif de commande (25) étant conçu de telle sorte, que dans le premier mode de fonctionnement (M1), l'alimentation d'un liquide puisse être initiée automatiquement par le dispositif de commande (25) si un filtre à liquide (5) est placé dans la position de filtrage prédéfinie, pour provoquer un lavage automatique du filtre à liquide (5) avec le liquide.

6. Machine de préparation de boissons (1) selon la revendication 2,
le dispositif de commande (25) étant conçu de telle sorte, que dans le quatrième mode de fonctionnement (M4), le dispositif de commande (25) détermine en continu, au moyen d'une évaluation du signal du capteur (6) si pendant une première période et pendant une seconde période successive à la première période, chaque fois un filtre à liquide (5) est placé dans la position de filtrage prédéfinie, et que le dispositif de commande (25) initie automatiquement l'alimentation d'un liquide pendant la seconde période, si pendant la première période, aucun filtre à liquide (5) n'est placé dans la position de filtrage prédéfinie et pendant la seconde période, un filtre à liquide (5) est placé dans la position de filtrage prédéfinie.

7. Machine de préparation de boissons (1) selon l'une quelconque des revendications 1 à 6, laquelle comporte un élément de commande (30) pour sélectionner un mode de fonctionnement parmi les plusieurs modes de fonctionnement (M1, M2, M3, M4).

8. Procédé (V) destiné à faire fonctionner une machine de préparation de boissons (1) pour la préparation d'une boisson,
laquelle machine de préparation de boissons (1) est susceptible de fonctionner dans plusieurs modes de fonctionnement (M1, M2, M3, M4) et comprend :
un réservoir à liquide (3) pour un liquide,
un système préparateur de boissons (10) pour la préparation de la boisson au moyen d'un liquide,
au moins un conduit à fluide (12), lequel est relié avec le réservoir à liquide (3) et le système préparateur de boissons (10), pour permettre l'alimentation d'un liquide du réservoir à liquide (3) vers le système préparateur de boissons (10) via l'au moins un conduit à fluide (12),
un système de logement (4) pour le logement d'au moins un filtre à liquide (5), lequel peut être placé dans une position de filtrage prédéfinie et retiré par la suite,
un capteur (6) pour la détection d'un filtre à liquide (5) et
un dispositif de commande (25) pour commander une alimentation d'un liquide du réservoir à liquide (3) dans l'au moins un conduit à fluide (12),
le système de logement (4) étant conçu de telle sorte, qu'indépendamment du fait si un filtre à liquide (5) est placé dans la position de filtrage prédéfinie, une alimentation d'un liquide du réservoir à liquide (3) vers le système préparateur de boissons (10) via l'au moins un conduit à fluide (12) soit possible, et que si un filtre à liquide (5) est placé dans la position de filtrage prédéfinie, lors de l'alimentation d'un liquide du réservoir à liquide (3) dans l'au moins un conduit à fluide (12), au moins une partie du liquide doive passer le filtre à liquide (5), et
le capteur (6) étant conçu pour générer un signal, lequel contient une information sur le fait si un filtre à liquide (5) est placé dans la position de filtrage prédéfinie,
lequel procédé (V) comprend les étapes suivantes :
de l'activation (S2) de l'un des modes de fonctionnement (M1, M2, M3, M4) de la machine de préparation de boissons (1), les modes de fonctionnement comprenant au moins un mode de fonctionnement (M2) pour la préparation d'une boisson et un mode de fonctionnement (M3) pour le nettoyage ou le détartrage de l'au moins un conduit à fluide (12),
de l'évaluation (S4-1, S4-3, S4-4, S5-4) d'un signal du capteur (6) au moyen du dispositif de commande (25), le dispositif de commande (25) déterminant si un filtre à liquide (5) est placé dans la position de filtrage prédéfinie, et commandant une alimentation d'un liquide du réservoir à liquide (3) dans l'au moins un conduit à fluide (12),
**caractérisé en ce que**
pour le cas où le mode de fonctionnement (M2) pour la préparation d'une boisson est activé, le dispositif de commande (25) initie l'alimentation d'un liquide du réservoir à liquide (3) dans l'au moins un conduit à fluide (12) indépendamment du fait, si un filtre à liquide (5) est placé dans la position de filtrage prédéfinie, et
pour le cas où le mode de fonctionnement (M3) pour le nettoyage ou le détartrage de l'au moins un conduit à fluide (12) est activé, initie l'alimentation d'un liquide du réservoir à liquide (3) dans l'au moins un conduit à fluide (12) exclusivement si aucun filtre à liquide (5) n'est placé dans la position de filtrage prédéfinie.

9. Procédé (V) selon la revendication 8,
les modes de fonctionnement (M1, M2, M3, M4) comprenant un mode de fonctionnement (M1) pour la première mise en service de la machine de préparation de boissons (1) et
après une activation du mode de fonctionnement (M1) pour la première mise en service de la machine de préparation de boissons (1), par évaluation du signal du capteur (6), le dispositif de commande (25) déterminant si un filtre à liquide (5) est placé dans la position de filtrage prédéfinie, et initiant une alimentation d'un liquide du réservoir à liquide (3) dans l'au moins un conduit à fluide (12) s'il résulte de l'évaluation du signal du capteur (6) qu'un filtre à liquide (5) est placé dans la position de filtrage prédéfinie.

10. Procédé (V) selon l'une quelconque des revendications 8 ou 9,
les modes de fonctionnement (M1, M2, M3, M4) comprenant un mode de fonctionnement (M4) pour le remplacement d'un filtre à liquide (5) placé dans la position de filtrage prédéfinie et
après une activation du mode de fonctionnement (M4) pour le remplacement d'un filtre à liquide (5) placé dans la position de filtrage prédéfinie, par évaluation du signal du capteur (6), le dispositif de commande (25) déterminant si pendant une première période et pendant une deuxième période successive à la première période, chaque fois un filtre à liquide (5) est placé dans la position de filtrage prédéfinie, et le dispositif de commande (25) initiant automatiquement l'alimentation d'un liquide pendant la deuxième période si pendant la première période, aucun filtre à liquide (5) n'est placé dans la position de filtrage prédéfinie et pendant la deuxième période, un filtre à liquide (5) est placé dans la position de filtrage prédéfinie.

11. Procédé (V) selon la revendication 8,
pour le cas où le mode de fonctionnement (M3) pour le nettoyage ou le détartrage de l'au moins un conduit à fluide (12) est activé et le dispositif de commande (25) détermine, par évaluation d'un signal du capteur (6) qu'un filtre à liquide (5) est placé dans la position de filtrage prédéfinie, le dispositif de commande (25) transmettant à un système de signalisation (31) une information susceptible d'être représentée par le système de signalisation (1) sur le fait qu'un filtre à liquide (5) est placé dans la position de filtrage prédéfinie et/ou qu'aucune alimentation d'un liquide du réservoir à liquide (3) dans l'au moins un conduit à fluide (12) n'est initiée.

12. Procédé (V) selon la revendication 11,
par évaluation d'un signal du capteur (6), le dispositif de commande (25) déterminant pendant une période si le filtre à liquide (5) reste présent dans la position de filtrage prédéfinie, et le dispositif de commande (25) initiant une alimentation d'un liquide du réservoir à liquide (3) dans l'au moins un conduit à fluide (12) dès qu'il résulte de l'évaluation du signal que le filtre à liquide (5) est retiré de la position de filtrage prédéfinie.
